(19) Europäisches Patentamt
European Patent Office
Office européen des brevets

(11) **EP 2 145 204 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **08716174.1**

(22) Anmeldetag: **03.03.2008**

(51) Int Cl.:
***G01S 3/808*** (2006.01) ***G10K 11/34*** (2006.01)

(86) Internationale Anmeldenummer:
**PCT/EP2008/001652**

(87) Internationale Veröffentlichungsnummer:
**WO 2008/135108 (13.11.2008 Gazette 2008/46)**

(54) **VERFAHREN ZUM PEILEN VON SCHALLABSTRAHLENDEN ZIELEN SOWIE PEILANLAGE**

METHOD FOR TAKING BEARINGS OF SOUND-EMITTING TARGETS, AND BEARING SYSTEM

PROCÉDÉ DE RELÈVEMENT DE CIBLES ÉMETTANT DES ONDES SONORES ET DISPOSITIF DE RELÈVEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007 DE 102007019979**

(43) Veröffentlichungstag der Anmeldung:
**20.01.2010 Patentblatt 2010/03**

(73) Patentinhaber: **ATLAS Elektronik GmbH**
**28309 Bremen (DE)**

(72) Erfinder:
• **PLÜMECKE, Gerrit**
**28357 Bremen (DE)**
• **SCHAUMBURG, Udo**
**27801 Brettorf (DE)**

(74) Vertreter: **Wasiljeff, Johannes M.B. et al**
**Jabbusch Siekmann & Wasiljeff**
**Patentanwälte**
**Otto-Lilienthal-Strasse 25**
**28199 Bremen (DE)**

(56) Entgegenhaltungen:
**GB-A- 2 412 967          JP-A- 8 220 217**
**US-A1- 2002 023 497**

EP 2 145 204 B1

**Beschreibung**

Die Erfindung betrifft ein Verfahren zum Peilen von schallabstrahlenden Zielen gemäß Anspruch 1, 2,3 oder 4. Ferner betrifft die Erfindung eine Peilanlage zum Peilen von schallabstrahlenden Zielen gemäß Anspruch 9, 10, 11 oder 12.

Bei der Wasserschallortung werden von einem Wasserfahrzeug oder einer sonstigen Schallquelle abgestrahlte Geräusche oder reflektierte Schallwellen empfangen, um eine Peilung, d.h. einen zu der Geräuschquelle zugehörigen Peilwinkel zu erhalten. Der Empfang erfolgt über eine Empfangsantenne, welche eine Vielzahl elektroakustischer Wandler zum Empfangen von Schallwellen und Erzeugen von elektrischen Empfangssignalen aufweist. Derartige Wandler werden im Falle der Wasserschallortung als Hydrophone bezeichnet. Derartige Hydrophone weisen regelmäßig eine Rundumcharakteristik auf. D.h. sie haben keine Hauptempfangsrichtung.

Eine entsprechende Peilanlage weist neben der Empfangsantenne ferner einen Richtungsbildner auf, in dem Empfangssignale der Wandler zu Gruppensignalen einer oder mehrerer Richtcharakteristiken oder Richtfunktionen verarbeitet werden. Eine derartige Empfangsantenne weist wenigstens eine Hauptempfangsrichtung auf, welche jedoch durch elektronische Maßnahmen schwenkbar ist. Ist die Empfangsantenne horizontal ausgerichtet, ergibt sich eine in Azimut hochauflösende Peilanlage, ohne relevantes vertikales Auflösevermögen bzw. Auflösevermögen in Elevation, insbesondere wenn die Empfangsantenne nur eine geringe vertikale Wandlerbestückung oder nur einen Wandler in vertikaler Richtung aufweist.

Eine derartige horizontal ausgerichtete Empfangsantenne weist in einer durch den geometrischen Mittelpunkt der Antenne verlaufenden Horizontalebene in der Regel zwei zur Antennenlängsachse symmetrische horizontale Hauptempfangsrichtungen auf, die mit auf die Antenne bezogenen Peilwinkeln übereinstimmen, d.h. Winkel, in deren Richtungen gepeilt werden kann. Dabei beschreibt ein "antennenbezogener Peilwinkel" eine Schar gegenüber der Antennenlängsachse verschwenkter Richtungen, die eine Kegelmantelfläche bzw. im Grenzfall, d.h. im Fall eines senkrecht zur Antennenlängsachse weisenden Peilwinkel eine Ebene bildet. Wird die Antenne jedoch geneigt, fallen die auf die Antenne bezogenen Peilwinkel und die horizontalen Hauptempfangsrichtungen auseinander.

Als Empfangsantenne werden entweder gerade Linearantennen, z.B. sog. Schleppantennen (towed arrays) oder Seitenantennen (flank arrays), Zylinderbasen oder gebogene Basen, z.B. Hufeisenbasen (conformal arrays) verwendet.

Bei der Linearantenne sind die Wandler längs einer Linie, bspw. Geraden, regelmäßig äquidistant angeordnet. Bei einer Zylinderbasis sind die Wandler nebeneinander im Kreis angeordnet. Bei einer gebogenen Basis oder conformal array sind die Wandler bspw. längs der Kontur des Trägerfahrzeugs, z.B. um den Bug eines Wasserfahrzeugs, insbesondere als Hufeisenbasis, angeordnet.

Bei einer Linearantenne werden zum Bilden des Gruppensignals einer Richtfunktion die Empfangssignale der längs der Geraden angeordneten Wandler zeitgleich aufsummiert. Die Hauptempfangsrichtung dieser Richtfunktion weist in Richtung der Senkrechten auf die Antenne. Der auf diese Senkrechte bezogene antennenbezogene Peilwinkel beträgt in diesem Fall 0°. Der Öffnungswinkel ihrer Hauptkeule ist durch die Frequenz der Empfangssignale und die Länge der Antenne bestimmt.

Für mehrere Richtfunktionen, deren jeweilige horizontale Hauptempfangsrichtungen einen Fächer aufspannen und gegenüber der Senkrechten auf die Antenne in der Horizontalebene unterschiedliche Empfangswinkel und daher auch unterschiedliche antennenbezogene Peilwinkel aufweisen, werden die Empfangssignale der Wandler abhängig von dem Empfangswinkel der horizontalen Hauptempfangsrichtung derart gegeneinander verzögert, dass Laufzeitunterschiede der Schallwelle aufgrund ihrer Einfallsrichtung bis zum Eintreffen am Wandlerort kompensiert werden. Zur Berechnung der Laufzeitverzögerung wird eine Referenzlinie senkrecht zur horizontalen Hauptempfangsrichtung in der Horizontalebene und das Lot von jedem Wandler auf die Referenzlinie ermittelt. Das Lot wird durch die Ausbreitungsgeschwindigkeit des Schalls geteilt und ergibt eine Gesamtverzögerung für das Empfangssignal jedes Wandlers. Die mit ihren individuellen Gesamtverzögerungen beaufschlagten Empfangssignale der Wandler werden summiert und bilden die o.g. Gruppensignale. Jedem Gruppensignal ist eine Richtfunktion und somit ein antennenbezogener Peilwinkel und eine bzw. zwei horizontale, symmetrisch zur Längsachse liegende Hauptempfangsrichtungen zugeordnet. Amplituden der Gruppensignale von benachbarten Richtcharakteristiken werden verglichen. Die größte Amplitude weist das Gruppensignal auf, dessen Richtcharakteristik mit seiner Hauptkeule bzw. horizontalen Hauptempfangsrichtung exakt oder näherungsweise in die Einfallsrichtung der Schallwellen weist. Diese Richtung gibt die Peilung zum Ziel, d.h. den vorliegend als "zielzugehörigen Peilwinkel" (horizontalen zielzugehörigen Peilwinkel) bezeichneten Winkel in der Horizontalebene an.

Andere Antennenanordnungen werden nach dem gleichen Prinzip behandelt. Jedoch kann bei gekrümmten Antennen nicht mit gleichen Laufzeitverzögerungen von Wandler zu Wandler gearbeitet werden. Vielmehr muss stets die geometrische Anordnung der Wandler berücksichtigt werden. Dies gilt bspw. ebenfalls bei den oben erwähnten Zylinderbasen oder Hufeisenbasen.

Von besonderem Interesse sind Linearantennen eines Unterwasserfahrzeugs, z.B. eines UUV (unmaned underwater vehicle) oder U-Bootes, also bspw. das bereits oben genannten flank array, d.h. eine linear ausgebildete Seitenantenne, oder das o.g. towed array, d.h. eine nachgezogene Schleppantenne. Diese Antennen werden verwendet, um weit entfernte Ziele zu orten und zielzugehörige Peilwinkel zu diesen Zielen für die Zieldatengenerierung zu liefern.

Derartige Antennen erzeugen die bereits oben erwähnten Richtcharakteristiken, die jedoch räumlich ausgebildet sind. Es ergeben sich somit räumliche Richtfunktionen, welche rotationssymmetrisch um die Linearantenne angeordnet sind. Dies ist insbesondere bei der genannten Schleppantenne der Fall. Bei der genannten Seitenantenne sind diese räumlichen Richtfunktionen nur bereichsweise rotationssymmetrisch, da ein Teil durch den Rumpf des Unterwasserfahrzeugs verschattet wird.

Obwohl die Richtfunktionen räumlich ausgebildet sind, genügt in vielen Fällen eine Betrachtung der Richtfunktionen in einem Schnitt mit der Horizontalebene. Es ergibt sich dann der o.g. Fächer bzw. eine Schar äquidistanter horizontaler Richtfunktionen, mittels derer der Horizont abgetastet werden kann.

Unterwasserfahrzeuge, z.B. U-Boote, fahren vorzugsweise in gleichbleibender Tiefe und auf ebenem Kiel. Dabei wird der Horizont gleichmäßig abgetastet, um Zielpeilungen gewinnen zu können.

Diese bekannte Zielpeilungsgenerierung hat jedoch den Nachteil, dass im Falle einer schnellen Änderung der Tauchtiefe die Linearantenne geneigt wird. Es treten dabei Neigungswinkel von bis zu 30° gegenüber der Horizontalebene auf. Bei einem derartigen Manöver neigen sich die räumlich ausgebildeten Richtfunktionen der Linearantenne mit der Längsachse des Unterwasserfahrzeugs. Im Schnitt mit der Horizontalebene ergeben sich dann Richtfunktionen, die weder in äquidistanten Winkelabschnitten noch mit konstanter Empfindlichkeit die Horizontalebene abtasten können.

Ferner treten auch bei UVVs regelmäßig signifikante Neigungswinkel auf. Im Gegensatz zu bemannten Unterwasserfahrzeugen müssen UVVs keine Rücksicht auf sich an Bord befindende Personen nehmen. Neigungswinkel bis zu 45° sind daher bei UVVs keine Seltenheit. UVVs umfassen ebenfalls die genannten Antennen, insbesondere Linearentennen. Daher treten bei UVVs ähnliche Probleme wie bei bemannten Unterwasserfahrzeugen auf.

Ferner tritt eine signifikante Neigung bei hinter einem langsam fahrenden Über - oder Unterwasserfahrzeug hergezogenen Schleppantennen auf. Bei langsamer Fahrt sinkt nämlich das Antennenende ab, so dass die Antenne einen signifikanten Neigungswinkel einnehmen kann.

Bei bekannten Peilanlagen ergibt sich daher der Nachteil, dass eine automatische Zielverfolgung beeinträchtigt wird, wenn die Tauchtiefe schnell verändert wird oder ein Unterwasserfahrzeug aus sonstigem Grund eine Neigungsfahrt durchführt oder ein eine Schleppantenne ziehendes Wasserfahrzeug nur langsam fährt und dabei die jeweilige Empfangsantenne geneigt wird. Durch das Neigen der Empfangsantenne wandert das Ziel durch mehrere Richtfunktionen hindurch. Scheinbar ändert sich dadurch die Peilung des Ziels, d.h. der zielzugehörige Peilwinkel. Ferner wird die räumliche Integration der Zielgeräusche gestört, was schließlich zum Peilverlust des Ziels führt. D.h. die mit Hilfe der Empfangsantenne zuvor großräumig erfassten Zielpeilungen gehen bei einem derartigen Tauchgang verloren.

Herkömmlicherweise wird beim U-Boot einem Verlust der Zielpeilung dadurch entgegengewirkt, dass beim Tauchen das U-Boot auf ebenem Kiel gehalten wird, so dass sich keine Verzerrung des Fächers der Richtfunktionen ergibt. Ein derartiges Tauchen auf ebenem Kiel erfordert jedoch ein zeitaufwändiges Verfahren, insbesondere ein wesentlich zeitaufwändigeres Verfahren als ein Auf- oder Abtauchen in Neigungsfahrt. Sofern aufgrund einer Neigung jedoch Zielpeilungen verloren gegangen sind, vergeht wertvolle Zeit, um eine Zuordnung der Zielpeilungen und eine neue Lagedarstellung wiederherzustellen.

Aus dem Bereich von Überwasserfahrzeugen ist bereits ein Einsatz von Aktivsonaren für die Erstellung von Sonarbildern einer Unterwasserumgebung unter Berücksichtigung von Roll-, Stampf- und Gierbewegungen des Überwasserfahrzeugs bekannt.

GB 2 412 967 A lehrt, dass bei einem Aktiv-Sonar zur Fischortung die Richtung die akustische Achse einer Empfangsrichtcharakteristik mit der Richtung der Sendecharakteristik übereinstimmt, indem die Phasen der reflektierten Signale in Abhängigkeit von Stampf- und Rollwinkeln justiert werden, welche zum Zeitpunkt des Empfangs der reflektierten Signale gemessen werden.

US 2002/0023497 A1 zeigt ein Aktiv-Sonarsystem zum Auffinden von Fischschwärmen. Dieses Sonarsystem ist auf einem Überwasserfahrzeug angeordnet, welches Rollbewegungen und Stampfbewegungen vollführt. Eine am Überwasserfahrzeug angeordnete Zylinderbasis als Sende- und Empfangsantenne vollführt diese Roll- und Stampfbewegungen ebenfalls, so dass schiffsbezogene Positionen auf einer Anzeige entsprechend ihre Lage ändern würden. Es wird daher vorgeschlagen, dass die schräg nach unten weisenden Richtungen von Antennen-Richtfunktionen der Zylinderbasis durch Phasensteuerung der gesendeten bzw. empfangenen Signale abhängig von den Schiffsbewegungen so gesteuert werden, dass eine ruhige Lagedarstellung erreicht wird.

Schließlich schlägt JP 08220217 A vor, einen Richtungsfehler in einer horizontalen Richtfunktion zu korrigieren, der durch eine Oszillation eines Schiffes in einer am Schiff angeordneten Sonaranlage erzeugt wird.

Der Erfindung liegt nach alledem das Problem zugrunde, horizontale Zielpeilungen auch bei Tauchfahrten mit sich verändernder Schräglage der Längsachse eines Unterwasserfahrzeugs aus der Horizontalen oder der Empfangsantenne aufrecht zu erhalten.

Die Erfindung löst dieses Proble durch die Merkmale eines Verfahrens zum Peilen gemäß Anspruch, 2, 3 oder 4 sowie durch eine Peilanlage mit den Merkmalen des Anspruchs 9, 10, 11 oder 12.

Der Erfindung liegt die Erkenntnis zugrunde, dass bei der Signalverarbeitung der Empfangssignale der Empfangsantenne der Neigungswinkel der Empfangsantenne gegenüber der Horizontalebene berücksichtigt werden muss, um den zu einem Ziel gehörenden Peilwinkel unabhängig von der Neigung der Empfangsantenne korrekt anzugeben. Die Erfindung hat ferner erkannt, dass der Einfluss der Neigung auf die von der Empfangsantenne gelieferten Empfangssignale determiniert und daher bestimmbar ist. Es muss jedoch der Neigungswinkel ermittelt bzw. gemessen und der Signalverarbeitung zugeführt werden. Durch geeignete Verrechnung des Neigungswinkels während der Signalverarbeitung erhält man zu Zielen zugehörige Peilwinkel (horizontale zielzugehörige Peilwinkel) und somit eine Lagedarstellung, die unabhängig vom Neigungswinkel ist.

Durch das Erfassen des Neigungswinkels und Verrechnen des Neigungswinkels während der Signalverarbeitung können nunmehr auch schnelle Tauchfahrten mit einer Neigung des Unterwasserfahrzeugs, z.B. U-Bootes und der mit dem U-Boot in Verbindung stehenden Antennen durchgeführt werden, ohne dass die Zielpeilung verloren geht. Ein Tauchen auf ebenem Kiel ist dank der Erfindung nicht mehr erforderlich.

Ferner können nunmehr auch langsam fahrende Über- oder Unterwasserfahrzeuge Schleppantennen sinnvoll einsetzen, insbesondere auch dann, wenn die Schleppantenne bereits einen signifikanten Neigungswinkel aufgrund eines Absinkens der Schleppantenne eingenommen hat.

Gemäß einer ersten Ausführung der Erfindung werden Zielen zugeordnete Peilwinkel zunächst auf herkömmliche Weise, d.h. ohne Berücksichtigung des Neigungswinkels der Empfangsantenne ermittelt und sodann um einen vom Neigungswinkel und dem jeweiligen antennenbezogenen Peilwinkel abhängigen Korrekturwert korrigiert. Zu jedem antennenbezogenen Peilwinkel gehört eine horizontale Hauptempfangsrichtung einer räumlichen Richtfunktion in der Horizontalebene, in welcher sich das geometrische Zentrum der Linearantenne befindet. Diese antennenbezogenen Peilwinkel ergeben sich in Abhängigkeit von Zeitverzögerungskoeffizienten, welche auf die Empfangssignale der elektroakustischen Wandler zum Bilden einer Richtfunktion angewendet werden.

Bei dieser Ausführung erfolgt eine Korrektur der zu Zielen zugehörigen Peilwinkel; es wird ein sog. Ziel-Tracker, welcher ein Ziel auf einem Anzeigegerät symbolisiert, nachgeführt, um die durch die Neigung der Empfangsantenne verfälschte horizontale Hauptempfangsrichtung zu korrigieren. Hierzu werden die räumlichen Richtfunktionen mit der Horizontalebene geschnitten und die sich gegenüber einer nicht geneigten Empfangsantenne ergebende Verzerrung der einzelnen Richtfunktionen berücksichtigt. Der Bediener der Peilanlage erhält somit weiterhin die tatsächliche Peilung in der Horizontalebene korrekt angezeigt.

Diese Korrekturwerte werden bei einer besonderen Ausführungsform empirisch ermittelt und dann in einem Datenspeicher hinterlegt. Diese Ausführungsform ist vorteilhaft, wenn die Berechnung der räumlichen Richtfunktionen aufgrund der geometrischen Komplexität der Empfangsantennenanordnung schwierig oder unmöglich ist. Die empirische Ermittlung von Korrekturwerten eignet sich insbesondere für als Zylinderbasen oder Hufeisenantennen oder beliebig gekrümmte Antennen ausgebildete Empfangsantennen. Die Richtfunktionen derartiger Antennenkonstruktionen sind insbesondere im Räumlichen sehr komplex und daher einer analytischen Berechnung kaum zugänglich.

Bei einer anderen Ausführungsform werden die Korrekturwerte jedoch berechnet, was insbesondere bei einfacheren Antennenformen, wie bspw. einer Linearantenne möglich ist. Die Berechnung kann entweder analytisch oder auch numerisch, insbesondere mittels Simulation, erfolgen.

Bei einer zweiten Ausführung der Erfindung werden die genannten Zeitverzögerungskoeffizienten in Abhängigkeit vom Neigungswinkel bestimmt. Die Zeitverzögerungskoeffizienten bestimmen die Ausrichtung der räumlichen Richtfunktionen, insbesondere in einer Horizontalebene. Durch Veränderung der Zeitverzögerungskoeffizienten können die Richtfunktionen in der Horizontalebene verschwenkt werden.

Erfindungsgemäß erfolgt dieses Verschwenken der Richtfunktionen in der Horizontalebene derart, dass die Richtfunktionen in der Ebene der geneigten Empfangsantenne die gleichen horizontalen Hauptempfangsrichtungen aufweisen wie die Richtfunktionen derselben, nicht-geneigten Empfangsantenne. Hierzu wird für jeden Neigungswinkel, den die Empfangsantenne einnehmen kann, oder für eine Mehrzahl von Neigungswinkelbereichen, innerhalb derer die Neigungswinkel liegen, welche die Empfangsantenne annehmen kann, für eine Anzahl von antennenbezogenen Peilwinkel jeweils ein für einen bestimmten antennenbezogenen Peilwinkel vorgesehener Satz von Zeitverzögerungskoeffizienten bereitgestellt. Dabei sind diese Sätze von Zeitverzögerungskoeffizienten derart bestimmt, dass entsprechende Antennen-Richtfunktionen verschiedener Neigungswinkel bzw. Neigungswinkelbereiche im Schnitt mit einer Horizontalebene gleiche horizontale Hauptempfangsrichtungen aufweisen und zwar unabhängig vom Neigungswinkel. Dieser Ansatz ist jedoch nicht mehr sinnvoll für eine senkrecht stehende Antenne, d.h. für eine Antenne, die um 90° geneigt ist. Vielmehr ist der Neigungswinkel auf einen technisch sinnvollen Bereich, insbesondere von kleiner als 45° zu beschränken.

Die Richtfunktionen werden somit derart nachgesteuert, dass eine bestimmte Richtfunktion, welche bei geneigter Antenne auf ein Ziel zeigt, die gleiche Richtfunktion ist, die auch bei nicht-geneigter Empfangsantenne auf dieses Ziel gezeigt hätte.

Es kann somit für jeden Neigungswinkel bzw. für eine Vielzahl von Neigungswinkelbereichen jeweils ein Satz von Zeitverzögerungskoeffizienten für jeden antennenbezogene Peilwinkel bereitgestellt werden. D.h. für jeden Neigungswinkel wird eine Tabelle von Zeitverzögerungskoeffizienten in einem Datenspeicher hinterlegt.

Vorteilhafterweise sind die Sätze von Zeitverzögerungskoeffizienten derart gewählt, dass für jeweils einen bestimmten Neigungswinkel bzw. einen bestimmten Neigungswinkelbereich die (horizontalen) Hauptempfangsrichtungen der Antennen-Richtfunktionen im Schnitt mit einer Horizontalebene in gleichen Winkelabständen angeordnet sind. Eine derartige äquidistante Anordnung der Richtfunktionen im Horizontalschnitt erlaubt eine gleichmäßige Auflösung über verschiedene horizontale Peilwinkel.

Bei einer weiteren bevorzugten Ausführungsform wird als Empfangsantenne eine Linearantenne mit äquidistant angeordneten Wandlern verwendet, wobei eine Zeitverzögerung zwischen zwei im Abstand l beabstandet angeordneten Wandlern gemäß

$$\tau_l = ([l \cdot \cos \nu] / c_o) \cdot \sin \xi$$

berechnet wird, wobei $\tau_l$ die Zeitverzögerung, $\nu$ den Neigungswinkel, $c_o$ die Schallgeschwindigkeit und $\xi$ den antennenbezogenen Peilwinkel bezeichnet. Mittels dieser Gleichung kann die Zeitverzögerung zwischen beliebigen Wandlern ermittelt werden. Diese Gleichung wird vorteilhafterweise verwendet, um die o.g. Tabellen für Zeitverzögerungskoeffizienten aus einer Tabelle einer nicht-geneigten Empfangsantenne zu ermitteln.

Beträgt der Abstand von zwei benachbarten Wandlern d, ergibt sich eine Zeitverzögerung $\tau_k$ zwischen einem der beiden äußersten Wandlern und dem k-ten Wandler zu

$$\tau_k = ([(k-1) \cdot d \cdot \cos \nu] / c_o) \cdot \sin \xi \quad \text{mit} \quad k = 1, 2, ..., n,$$

wobei n die Anzahl der Wandler einer Antenne der Länge L = (n-1) ● d bezeichnet.

Die Zeitverzögerungskoeffizienten können somit rechnerisch bestimmt und in einem Datenspeicher hinterlegt werden. Sie können jedoch auch empirisch bestimmt werden, bspw. indem Referenzmessungen durchgeführt werden.

Bei einer dritten Ausführung werden die Zeitverzögerungskoeffizienten einer nicht geneigten, insbesondere horizontal ausgerichteten Empfangsantenne mit dem Faktor $\cos \nu$ oder einem dem Kosinus des Neigungswinkels $\nu$ - z.B. mittels (Taylor-)Reihenentwicklung - angenähertem Faktor multipliziert, um die Zeitverzögerungskoeffizienten für eine um den Neigungswinkel $\nu$ geneigte Empfangsantenne zu erhalten. Diese Ausführung hat den Vorteil, dass nicht eine Vielzahl von Tabellen hinterlegt werden muss. Vielmehr genügt eine einzige Tabelle mit Zeitverzögerungskoeffizienten für die einzelnen Wandler in Abhängigkeit des antennenbezogenen Peilwinkels, wobei die jeweiligen Zeitverzögerungskoeffizienten von einer Signalverarbeitung mit dem Faktor $\cos \nu$ multipliziert werden.

Bei einer vierten Ausführung der Erfindung erfolgt die Anpassung der Signalverarbeitung in Abhängigkeit des Neigungswinkels dadurch, dass die der Signalverarbeitungseinrichtung zuführbare rechnerische Schallgeschwindigkeit (welche nicht zwangsläufig identisch ist mit der tatsächlichen Schallgeschwindigkeit) mit dem Faktor $1/\cos \nu$ multipliziert wird, wobei $\nu$ wiederum den Neigungswinkel bezeichnet. Dies ist eine sehr einfache und damit kostengünstige Variante zur Berücksichtigung des Neigungswinkels. Wiederum kann der Kosinus des Neigungswinkels alternativ auch bspw. durch (Taylor-)Reihenentwicklung angenähert werden.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:

Fig.1     eine schematische Ansicht zur Erläuterung einer erfindungsgemäßen Peilung von Zielen mittels einer geneigten Empfangsantenne mit einer Vielzahl von Wandlern;

Fig. 2    eine äquidistante Anordnung einer Mehrzahl von Antennenrichtfunktionen einer nicht-geneigten Empfangsantenne in einer Horizontalebene;

Fig. 3    die Anordnung der in Fig. 2 gezeigten Richtfunktionen in einer Vertikalebene;

Fig. 4    die Ausbildung einer Richtfunktion mit einer um 10° gegenüber der Querabrichtung geschwenkten Richtfunktion im Falle einer nicht-geneigten Empfangsantenne;

Fig. 5     die Anordnung der in Fig. 4 gezeigten Richtfunktionen in einer Vertikalebene;

Fig. 6     die Ausbildung einer Richtfunktion mit einer um 30° gegenüber der Querabrichtung geschwenkten Richtfunktion im Falle einer nicht-geneigten Empfangsantenne;

Fig. 7     die Anordnung der in Fig. 6 gezeigten Richtfunktionen in einer Vertikalebene;

Fig. 8     eine räumliche Darstellung der in den Fig. 4 und 5 gezeigten Richtfunktion, reduziert auf deren Hauptempfangsrichtungen;

Fig. 9     eine räumliche Darstellung der in den Fig. 6 und 7 gezeigten Richtfunktion, reduziert auf deren Hauptempfangsrichtungen;

Fig. 10    ein Diagramm zur Veranschaulichung der Empfindlichkeit der in Fig. 8 gezeigten Richtfunktion;

Fig. 11    ein Diagramm zur Veranschaulichung der Empfindlichkeit der in Fig. 9 gezeigten Richtfunktion;

Fig. 12    eine Ausbildung einer Richtfunktion mit einer um 10° gegenüber der Querabrichtung geschwenkten Richtfunktion im Falle einer um 10° geneigten Empfangsantenne;

Fig. 13    die Anordnung der in Fig. 12 gezeigten Richtfunktionen in einer Vertikalebene;

Fig. 14    die Ausbildung einer Richtfunktion mit einer um 30° gegenüber der Querabrichtung geschwenkten Richtfunktion im Falle einer um 10° geneigten Empfangsantenne;

Fig. 15    die Anordnung der in Fig. 14 gezeigten Richtfunktionen in einer Vertikalebene;

Fig. 16    eine räumliche Darstellung der in den Fig. 12 und 13 gezeigten Richtfunktion, reduziert auf deren Hauptempfangsrichtungen;

Fig. 17    eine räumliche Darstellung der in den Fig. 14 und 15 gezeigten Richtfunktion, reduziert auf deren Hauptempfangsrichtungen;

Fig. 18    ein Diagramm zur Veranschaulichung der Empfindlichkeit der in Fig. 16 gezeigten Richtfunktion;

Fig. 19    ein Diagramm zur Veranschaulichung der Empfindlichkeit der in Fig. 17 gezeigten Richtfunktion;

Fig. 20    eine Ausbildung einer Richtfunktion einer um 10° gegenüber der Querabrichtung geschwenkten Richtfunktion im Falle einer um 30° geneigten Empfangsantenne;

Fig. 21    die Anordnung der in Fig. 20 gezeigten Richtfunktionen in einer Vertikalebene;

Fig. 22    die Ausbildung einer Richtfunktion mit einer um 30° gegenüber der Querabrichtung geschwenkten Richtfunktion im Falle einer um 30° geneigten Empfangsantenne;

Fig. 23    die Anordnung der in Fig. 22 gezeigten Richtfunktionen in einer Vertikalebene;

Fig. 24    eine räumliche Darstellung der in den Fig. 20 und 21 gezeigten Richtfunktion, reduziert auf deren Hauptempfangsrichtungen;

Fig. 25    eine räumliche Darstellung der in den Fig. 22 und 23 gezeigten Richtfunktion, reduziert auf deren Hauptempfangsrichtungen;

Fig. 26    ein Diagramm zur Veranschaulichung der Empfindlichkeit der in Fig. 24 gezeigten Richtfunktion;

Fig. 27    ein Diagramm zur Veranschaulichung der Empfindlichkeit der in Fig. 25 gezeigten Richtfunktion;

Fig. 28    ein Diagramm zur Veranschaulichung eines Einhüllendenpegels einer Empfangsantenne mit Richtcharakteristiken gemäß den Fig. 2 und 3, d.h. bei nicht-geneigter Empfangsantenne, aufgetragen über den horizontalen Einfallswinkel bzw. Azimutwinkel;

Fig. 29    den Verlauf des einhüllenden Pegels entsprechend Fig. 28 jedoch für eine um 30° geneigte Empfangsantenne;

Fig. 30    eine Anordnung einer Mehrzahl von Antennenrichtfunktionen einer um 30° geneigten Emfpangsantenne in einer Horizontalebene;

Fig. 31    die Anordnung der in Fig. 30 gezeigten Richtfunktionen in einer Vertikalebene;

Fig. 32    eine Veranschaulichung der Pegelmaxima und 3-dB-Grenzlinien der im Zusammenhang mit den anhand von Fig. 2 bis 31 erläuterten Richtfunktionen in Abhängigkeit des Neigungswinkels der Empfangsantenne und in Abhängigkeit des horizontalen Einfallswinkels (Azimutwinkel);

Fig. 33    eine schematische Ansicht zur Erläuterung einer Peilung von Zielen mittels einer geneigten Empfangsantenne mit einer Vielzahl von Wandlern gemäß einem ersten Ausführungsbeispiel der Erfindung;

Fig. 34    eine Anordnung einer Mehrzahl von Antennenrichtfunktionen einer um 30° geneigten Emfpangsantenne in einer Horizontalebene;

Fig. 35    die Anordnung der in Fig. 34 gezeigten Richtfunktionen in einer Vertikalebene;

Fig. 36    eine schematische Ansicht zur Erläuterung einer Peilung von Zielen mittels einer geneigten Empfangsantenne mit einer Vielzahl von Wandlern gemäß einem zweiten Ausführungsbeispiel der Erfindung;

Fig. 37    eine räumliche Darstellung der Anordnung von äquidistant angeordneten Wandlern einer Linearantenne zur Veranschaulichung der Herleitung einer Gleichung zur Kompensation des neigungsbedingten Fehlers bei der Erzeugung von zielbezogenen Peilwinkeln;

Fig. 38    eine zwei-dimensionale Darstellung des in Fig. 37 dargestellten Sachverhalts in einer Horizontalebene mit einer schräg einfallenden ebenen Welle und

Fig. 39    eine schematische Ansicht zur Erläuterung einer Peilung von Zielen mittels einer geneigten Empfangsantenne mit einer Vielzahl von Wandlern gemäß einem dritten Ausführungsbeispiel der Erfindung.

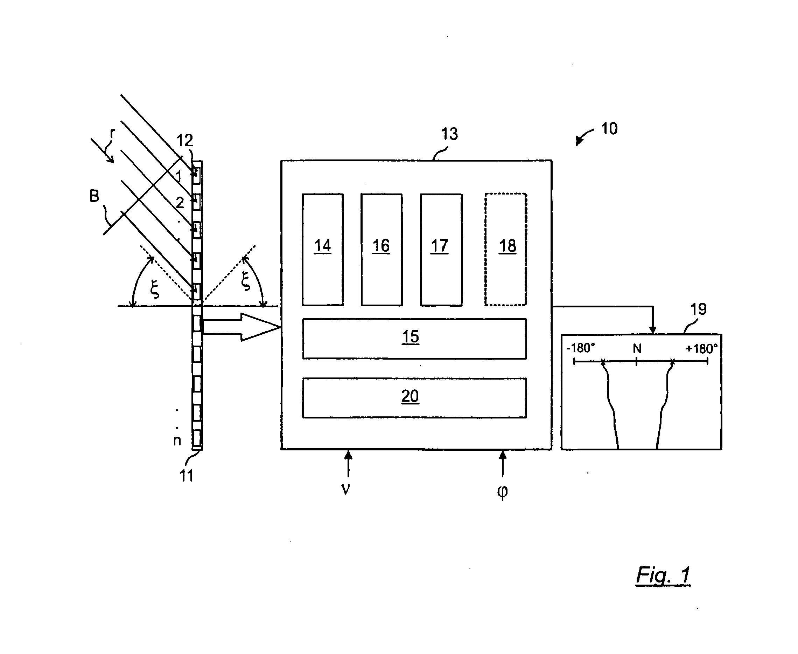

Fig. 1 zeigt ein Blockschaltbild einer erfindungsgemäßen Peilanlage 10 zur Peilung von schallabstahlenden, d.h. schallerzeugenden oder schallreflektierenden, Zielen. Die nachfolgenden Erläuterungen beziehen sich auf ein Unterwasserfahrzeug, insbesondere ein U-Boot. Sie sind jedoch auch auf andere Unter- oder Überwasserfahrzeuge zur Aufklärung einer Lage anwendbar.

Die Peilanlage weist eine Empfangsantenne 11 auf, wie sie bspw. als Seitenantenne bzw. sog. flank array oder als Schleppantenne bzw. sog. towed array, verwendet wird. Die Empfangsantenne 11 weist eine Vielzahl n von elektroakustischen Wandlern 12 auf, die vorzugsweise äquidistant, d.h. mit gleichbleibenden Abständen voneinander in einer Reihe angeordnet sind. Vorzugsweise sind alle Wandler 12 entlang einer Geraden angeordnet.

Die Erfindung ist jedoch nicht auf derartige Linearantennen beschränkt. Bei alternativen Ausführungsbeispielen kommen andere Empfangsantennen, wie bspw. Zylinderbasen oder Hufeisenbasen zur Anwendung.

Die Erfindung kann mit in Elevation und/oder Azimut auflösenden Antennen verwendet werden, die gegenüber ihrer bei einer Horizontalbewegung der Antennen vorgesehenen Ausrichtung geneigt werden.

Die Wandler 12 sind komplett von einem schalltransparentem Hüllkörper überdeckt. Die Empfangsantenne 11 empfängt mittels der Wandler 12 einfallenden Schall, der von Ziele bildenden Schallquellen abgestrahlt wird und sich im Wasser ausbreitet.

Die Wandler 12 sind mit einer Signalverarbeitungseinrichtung 13 verbunden, welche anhand der elektrischen Ausgangssignale der Wandler 12, nachfolgend als Empfangssignale bezeichnet, die Einfallsrichtungen von Schall und damit die Peilung von Zielen in einer Horizontalebene bestimmt. Jedem dieser Peilwinkel wird ein Ziel zugeordnet, so dass im vorliegenden Zusammenhang von zielzugehörigen Peilwinkeln gesprochen wird.

Die Signalverarbeitungseinrichtung 13 der Peilanlage 10 weist einen Richtungsbildner 14 zum Anwenden von in einem Datenspeicher 15 abgespeicherten Zeitverzögerungskoeffizienten $\tau$ auf die Empfangssignale der Wandler 12 zum Bilden konphaser Empfangssignale auf. D.h. die Empfangssignale der Wandler 12 werden durch Anwendung der Zeitverzögerungskoeffizienten $\tau$ derart zeitverzögert, dass sie in einer zur horizontalen Einfallsrichtung r des Schalls rechtwinkligen Bezugsebene B konphas sind.

Die Signalverarbeitungseinrichtung 13 weist ferner eine Gruppensignalverarbeitungseinheit 16 zum Addieren der konphasen Empfangssignale zu Gruppensignalen auf, welche in Abhängigkeit von den jeweiligen Zeitverzögerungskoeffizienten $\tau$ auf die Empfangsantenne bezogenen Peilwinkeln $\xi$ - vorliegend als antennenbezogene Peilwinkel $\xi$ bezeichnet - zugeordnet sind. Diese Gruppensignalverarbeitungseinheit 16 ermittelt ferner Intensitätswerte, insbesondere Amplitudenwerte oder Leistungswerte, ggf. auch auf Referenzwerte bezogen in Form von Pegeln, der Gruppensignale in Zuordnung zu den antennenbezogenen Peilwinkeln $\xi$. Ferner erstellt die Gruppensignalverarbeitungseinheit 16 einen aus den ermittelten Intensitätswerten, insbesondere Pegeln, resultierenden Intensitätsverlauf bzw. Pegelverlauf über die antennenbezogenen Peilwinkel $\xi$. Ein Maximumdetektor 17 ermittelt, ggf. mittels Interpolation, lokale Maxima im Intensitätsverlauf, insbesondere von lokalen Pegelmaxima im Pegelverlauf, und ordnet diesen Maxima zielzugehörige Peilwinkel zu.

Die Signalverarbeitungseinrichtung 13 weist ferner eine Transformationseinheit 18 zum Transformieren der zielzugehörigen Peilwinkel auf auf Nord bezogene zielzugehörigen Peilwinkel auf, die im vorliegenden Zusammenhang als nordbezogene zielzugehörigen Peilwinkel bezeichnet werden. Diese Transformation auf Nord erfolgt in Abhängigkeit des sog. Headings $\varphi$ der Empfangsantenne, d.h. der Ausrichtung der Empfangsantenne nach der Himmelsrichtung. Dieses Heading $\varphi$ entspricht bei einer Seitenantenne, welche fest mit einem Boot verbunden ist, der Längsrichtung des Bootes in Bezug auf Nord. Bei einer hinter einem Boot hergezogenen Schleppantenne kann das Heading jedoch davon abweichen. Vereinfachend kann das Heading der Schleppantenne jedoch dem Heading des Bootes gleichgesetzt werden.

Die Peilanlage 10 weist ferner eine mit der Signalverarbeitungseinrichtung 13 in Verbindung stehende Ausgabeeinheit 19 auf, bspw. einen Monitor oder einen Drucker bzw. Plotter, auf der die zielzugehörigen Peilwinkel bzw. nordbezogenen zielzugehörigen Peilwinkel ausgegeben werden. Der Bediener der Peilanlage erhält mittels dieser Ausgabeeinheit 19 eine Darstellung von Peilspuren der sich in seinem Umfeld befindlichen schallabstrahlenden Ziele.

Die Signalverarbeitungseinrichtung 13 steht mit einem ersten Sensor, bspw. einem Kompass, in Verbindung, über welchen das Heading $\varphi$ der Signalverarbeitungseinrichtung 13 zugeführt wird.

Ferner steht die Signalverarbeitungseinrichtung mit einem weiteren Sensor in Verbindung, welcher eine Neigung der Empfangsantenne 11 gegenüber einer Horizontalebene angibt. Im Falle einer mit einem U-Boot verbundenen Seitenantenne entspricht diese Neigung $\nu$ der Neigung des U-Bootes, d.h. bspw. der Neigung des U-Bootes bei einer Tauchfahrt bzw. beim Auftauchen des Bootes.

Die Signalverarbeitungseinrichtung 13 weist ferner Korrekturmittel 20 zum Korrigieren der auszugebenden zielzugehörigen Peilwinkel bzw. nordbezogenen zielzugehörigen Peilwinkel um einen Fehler auf, der sich aus der Neigung $\nu$ der Empfangsantenne 11 ergibt. Diese Korrekturmittel 20 können an verschiedenen Stellen innerhalb der Signalverarbeitungseinrichtung 13 ansetzen. Entweder erfolgt die Korrektur eines zunächst errechneten zielzugehörigen Peilwinkels oder es erfolgt eine Korrektur bereits der Richtfunktionen, welche entweder durch Korrektur der Zeitverzögerungskoeffizienten für eine nicht-geneigte Empfangsantenne oder durch Erstellen mehrerer Gruppen von Zeitverzögerungskoeffizienten für unterschiedliche Neigungswinkel $\nu$ erzielt werden kann.

Entsprechende Ausführungsbeispiele werden nachfolgend erläutert. Zunächst wird jedoch die Richtungsbildung sowie die Entstehung und Verzerrung von Antennen-Richtfunktionen erläutert.

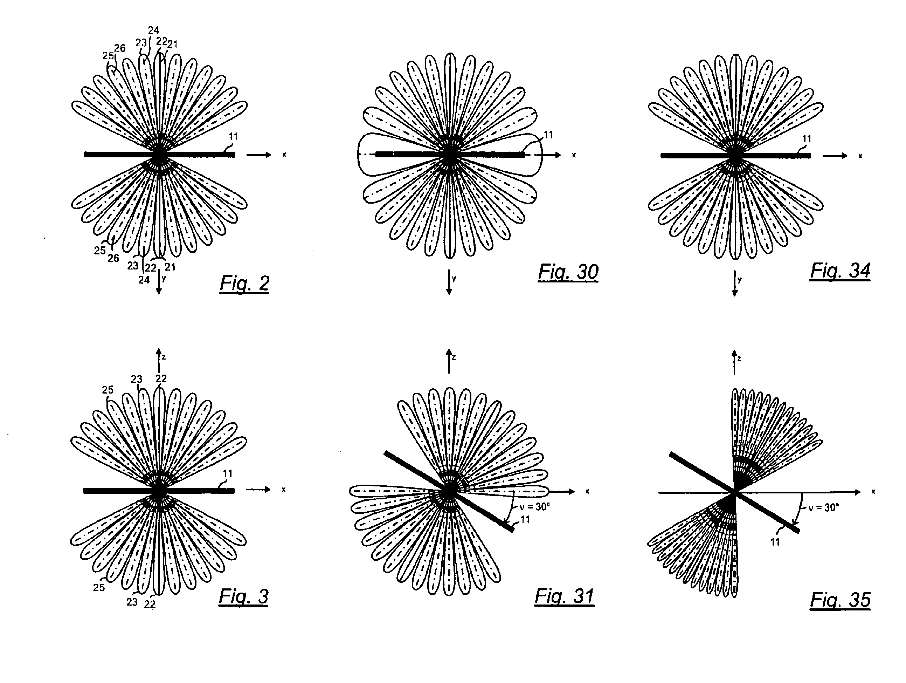

Fig. 2 zeigt eine schematisch als dicke Linie dargestellte Empfangsantenne 11, an der die genannte Vielzahl von n Wandlern (nicht dargestellt) angeordnet ist. Fig. 2 zeigt eine Mehrzahl von mittels Zeitverzögerungskoeffizienten gebildeten keulenartigen Richtfunktionen in einer Ansicht von oben, d.h. in einem Schnitt durch eine Horizontalebene (als x-y-Ebene bezeichnet).

Fig. 3 zeigt denselben Sachverhalt, jedoch in einem Schnitt durch eine Vertikalebene (als x-z-Ebene bezeichnet).

In den Fig. 2 und 3 sind jeweils dreizehn Richtfunktionen dargestellt, welche rotationssymmetrisch um die Längsachse der Empfangsantenne 11 ausgebildet sind.

Die Richtfunktionen sind jeweils durch zwei zusammengehörige (an der Antennenlängsachse gespiegelte) Keulen dargestellt, welche einen Abfall des Antennen-Empfangspegels um 3 dB darstellen. Die Keulen weisen zudem eine strichpunktierte bzw. eine durchgezogene Mittellinie auf, welche die entsprechende Hauptempfangsrichtung der jeweiligen Richtfunktion angibt. Zu jeder Richtfunktion gehört eine Schar von um die Antennenlängsachse rotationssymmetrischen Hauptempfangsrichtungen, die eine kegelmantelartig ausgebildete Fläche bilden. Sie entsteht dadurch, dass die Mittellinie einer Keule um die Längsachse der Empfangsantenne 11 rotiert.

Im Schnitt mit einer durch das geometrische Zentrum der Empfangsantenne verlaufenden Ebene ergeben sich dann zwei Geraden und somit zwei Hauptempfangsrichtungen in dieser Ebene. In Fällen einer Seitenantenne wird jedoch eine Hälfte des Raumes durch den Rumpf des Bootes verschattet, so dass tatsächlich nur noch eine einzige Hauptempfangsrichtung in Horizontalebene übrig bleibt. In den nachfolgend erläuterten Figuren ist jedoch diese Besonderheit der Verschattung einer Raumhälfte nicht berücksichtigt. Die Figuren entsprechen daher im Wesentlichen dem Sachverhalt z.B. einer Schleppantenne.

**EP 2 145 204 B1**

Zunächst wird eine Überlagerung der Empfangssignale der Wandler ohne eine Anwendung von Zeitverzögerungskoeffizienten auf die Empfangssignale betrachtet. D.h. alle Empfangssignale der Wandler werden gleichzeitig einander überlagert. Die Schar der Hauptempfangsrichtungen liegt dann senkrecht zur Längsachse der Empfangsantenne 11. In diesem Fall ist dies die Querabrichtung, welche durch die durchgezogene Linie 21 dargestellt ist. Zu dieser Querabrichtung gehört die ebenfalls senkrecht zur Empfangsantenne 11 angeordnete Richtfunktion 22.

Streng genommen weist eine derartige Antenne nicht nur ein Empfangsmaximum auf, sondern mehrere Nebenmaxima, die durch Nebenkeulen dargestellt werden könnten. Diese Nebenmaxima und Nebenkeulen sind jedoch aus Gründen der vereinfachten Darstellung vorliegend nicht betrachtet.

In den Fig. 2 und 3 sind zwölf weitere Antennenrichtfunktionen dargestellt, deren horizontalen Hauptempfangsrichtungen $\alpha$ und damit auch deren antennenbezogenen Peilwinkel $\xi$ jeweils in 10°-Schritten gegenüber der Querabrichtung verschwenkt sind. In der Praxis sind diese Winkelschritte jedoch wesentlich kleiner und liegen bspw. im Bereich von 1°, was jedoch zu zeichnerischen Schwierigkeiten führen würde. Benachbart zur Richtfunktion 22 befindet sich in einem entsprechenden Winkelschritt eine weitere Richtfunktion 23 mit einer horizontalen Hauptempfangsrichtung 24. Diese ist ebenfalls rotationssymmetrisch ausgebildet. Ihr antennenbezogener Peilwinkel $\xi$ beträgt -10°. Da die Antenne nicht geneigt ist, beträgt auch die horizontale Hauptempfangsrichtung $\alpha$ = -10°.

Es folgen weitere Richtfunktionen in beiden Azimutrichtungen. Beispielhaft ist die um insgesamt -30° geschwenkte Richtfunktion 25 gezeigt, deren antennenbezogener Peilwinkel $\xi$ = -30° beträgt. Da die Antenne nicht geneigt ist, beträgt auch die mit der Bezugsziffer 26 versehene horizontale Hauptempfangsrichtung $\alpha$ = -30°.

Fig. 3 entspricht Fig. 2, da die Empfangsantenne 11 in diesem Fall nicht geneigt ist.

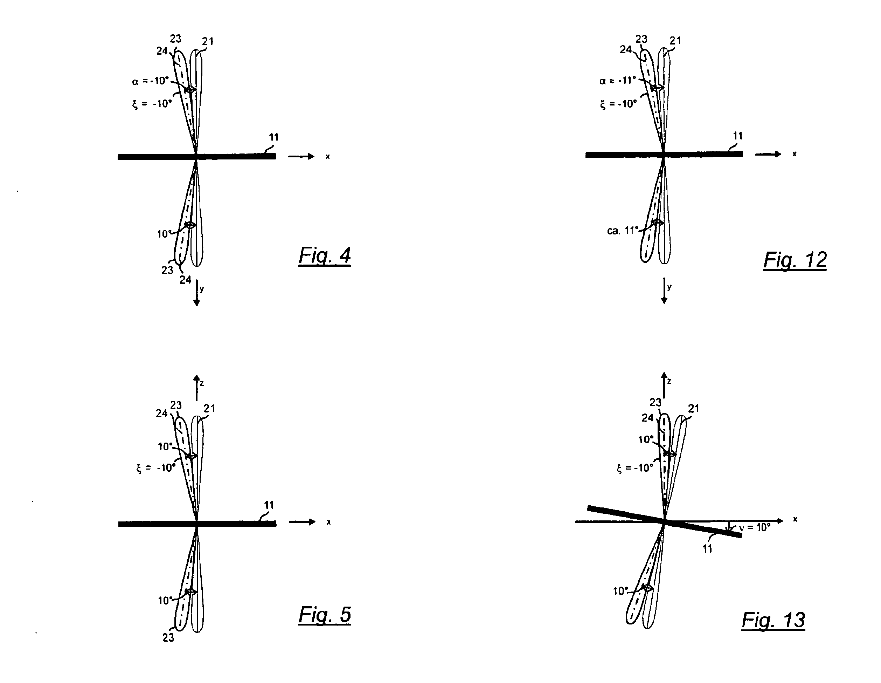

Die Fig. 4 bis 7 zeigen jeweils einzelne Antennen-Richtfunktionen, welche aus dem Fächer der Richtfunktionen gemäß den Fig. 2 und 3 herausgegriffen sind.

Die Fig. 4 und 5 zeigen die um -10° gegenüber der Querabrichtung 21 verschwenkte Antennen-Richtfunktion 23 mit horizontaler Hauptempfangsrichtung $\alpha$ = -10°, wie sie sich durch entsprechende Laufzeitverzögerungen der Empfangssignale der Wandler ergibt.

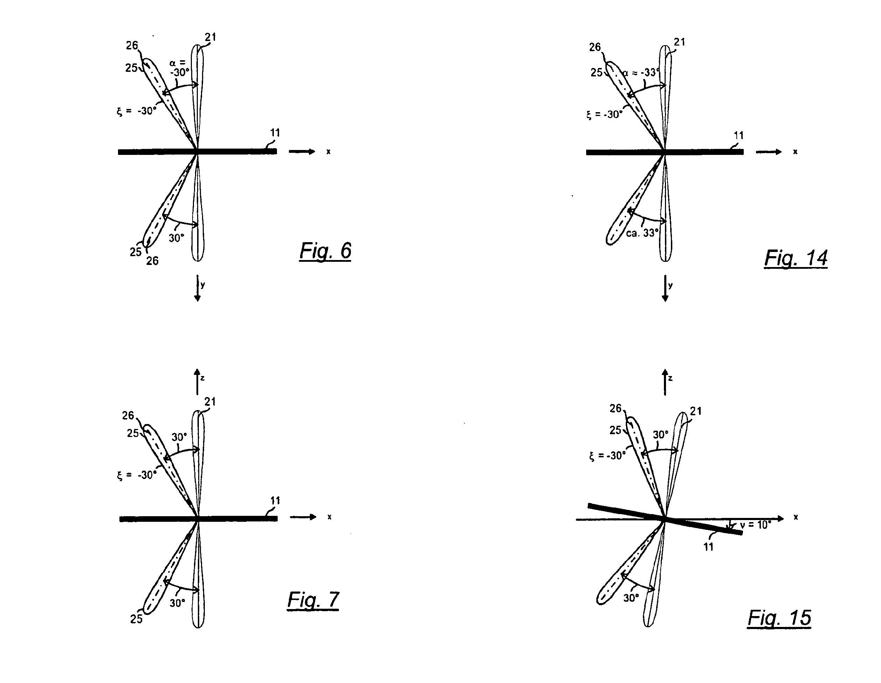

Durch Anwendung größerer Laufzeitverzögerungen ergibt sich eine um -30° gegenüber der Querabrichtung 21 verschwenkte Antennen-Richtfunktion 25 mit horizontaler Hauptempfangsrichtung $\alpha$ = -30° gemäß den Fig. 6 und 7.

Die Fig. 4 und 6 zeigen wiederum jeweils die Situation in einer Horizontalebene (x-y-Ebene), während die Fig. 5 und 7 die Situation in einer Vertikalebene (x-z-Ebene) veranschaulichen. Wiederum befindet sich die Empfangsantenne bei den Darstellungen gemäß den Fig. 4 bis 7 in einer nicht-geneigten Position.

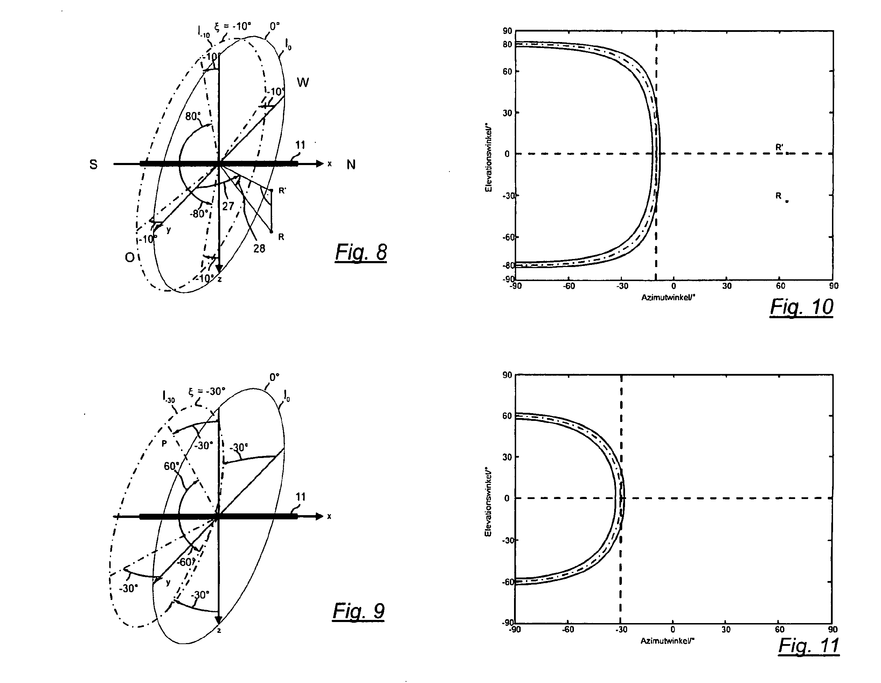

Die Fig. 8 und 9 veranschaulichen die in den Fig. 4 bis 7 dargestellten Verhältnisse in einer räumlichen Darstellung. Die Fig. 8 zeigt im einzelnen die Verhältnisse der um -10° verschwenkten Antennen-Richtfunktion gemäß den Fig. 4 und 5, d.h. mit antennenbezogenem Peilwinkel $\xi$ = -10°, während Fig. 9 die um -30° gegenüber der Querabrichtung verschwenkte Antennen-Richtfunktion gemäß den Fig. 6 und 7 zeigt, d.h. mit antennenbezogenem Peilwinkel $\xi$ = -30°.

Die Fig. 8 und 9 zeigen ein kartesisches Koordinatensystem mit x-, y- und z-Achsen. Die x-Achse weist in Nord-Richtung, während die y-Achse in Ost-Richtung weist. Die z-Achse zeigt zum Erdmittelpunkt. Die Empfangsantenne liegt (zufällig) auf der x-Achse. D.h. die Empfangsantenne befindet sich in einer Nord-Süd-Ausrichtung und ist nicht-geneigt.

In Fig. 8 veranschaulicht die durchzogene Linie $I_0$ die Hauptempfangsrichtungen der Antennen-Richtfunktion 22 gemäß den Fig. 2 und 3 mit antennenbezogenem Peilwinkel $\xi$ = 0°. Die strichpunktierte Linie $I_{-10}$ veranschaulicht den Schnitt durch die Hauptempfangsrichtungen der Antennen-Richtfunktion 23 gemäß den Fig. 2 bis 5 mit antennenbezogenem Peilwinkel $\xi$ = -10°.

Die aus den Hauptempfangsrichtungen der Antennen-Richtfunktion 23 erzeugte Linienschar bildet eine kegelmantelartige Fläche, welche die x-y-Ebene in einem Azimutwinkel von -10° schneidet. Die horizontale Hauptempfangsrichtung $\alpha$ beträgt somit -10°. Dies kegelmantelartige Fläche schneidet die x-z-Ebene in Elevationswinkeln von +/-80°.

Diese Schnittwinkel sind aus Fig. 10 ebenfalls ablesbar, welche die Antennen-Richtfunktion 23 mit antennenbezogenem Peilwinkel $\xi$ = -10° in einer Darstellung von Linien gleicher Antennendämpfung in Abhängigkeit vom Azimutwinkel und vom Elevationswinkel zeigt. Die strichpunktierte Linie stellt den Verlauf geringster Antennendämpfung und somit der Hauptempfangsrichtungen und die durchgezogenen Linien stellen die Keulenbreite der Richtfunktion mit einer Antennendämpfung von 3 dB dar.

In den Fig. 8 und 10 ist ferner zur Orientierung ein Punkt R markiert, um den Azimutwinkel 27 und den Elevationswinkel 28 und den Zusammenhang zwischen den Fig. 8 und 10 zu veranschaulichen. Der Punkt R' ist die Projektion des Punktes R auf die x-y-Ebene. Der Azimutwinkel 27 der Punkte R bzw. R' beträgt ca. 60°. Der Elevationswinkel 28 des Punktes R beträgt ca. -30°.

In Fig. 9 veranschaulicht wiederum die durchzogene Linie $I_0$ die Hauptempfangsrichtungen der Antennen-Richtfunktion 22 gemäß den Fig. 2 und 3 mit antennenbezogenem Peilwinkel $\xi$ = 0°. Die strichpunktierte Linie $I_{-30}$ veranschaulicht nunmehr jedoch die Hauptempfangsrichtungen der Antennen-Richtfunktion 25 gemäß den Fig. 2 und 3 sowie 6 und 7 mit antennenbezogenem Peilwinkel $\xi$ = -30°.

Die Hauptempfangsrichtungen der Antennen-Richtfunktion 25 bilden eine kegelmantelartige Fläche, welche die x-y-Ebene in einem Azimutwinkel von -30° schneidet. Die horizontale Hauptempfangsrichtung $\alpha$ beträgt somit -30°. Dies kegelmantelartige Fläche schneidet die x-z-Ebene in Elevationswinkeln von +/-60°.

Diese Schnittwinkel sind aus Fig. 11 ebenfalls ablesbar, welche die Antennen-Richtfunktion 25 mit antennenbezogenem Peilwinkel $\xi$ = -30° in einer Darstellung von Linien gleicher Antennendämpfung in Abhängigkeit vom Azimutwinkel und vom Elevationswinkel zeigt. Die strichpunktierte Linie stellt den Verlauf der Hauptempfangsrichtungen und die durchgezogenen Linien die Keulenbreite mit einer Antennendämpfung von 3 dB dar.

Fig. 12 bis 15 entsprechen weitgehend der Situation gemäß den Fig. 4 bis 7, wobei jedoch nunmehr die Empfangsantenne um $\nu$ = 10° geneigt ist. Dies wird insbesondere aus den Fig. 13 und 15 ersichtlich, welche einen Schnitt in einer Vertikalebene zeigen. An den Zeitverzögerungskoeffizienten für die Richtfunktionen mit antennenbezogenem Peilwinkel $\xi$ = -10° bzw. -30° wurde nichts geändert. Daher sind die Winkel der Richtfunktionen 23 bzw. 25 gemäß den Fig. 13 und 15 gegenüber den Fig. 5 und 7, d.h. im Vertikalschnitt, unverändert. Jedoch folgt aus einer derartigen Neigung der Empfangsantenne, dass die horizontale Hauptempfangsrichtung $\alpha$ gemäß den Fig. 12 bzw. 14 nunmehr in Richtung der Längsachse der Empfangsantenne 11 verschwenkt sind. D.h. die horizontale Hauptempfangsrichtung beträgt $\alpha \approx$ -11° für die Richtfunktionen mit antennenbezogenem Peilwinkel $\xi$ = -10° bzw. $\alpha \approx$ -33° für die Richtfunktionen mit antennenbezogenem Peilwinkel $\xi$ = -30°, jeweils bei einem Neigungswinkel $\nu$ = 10°.

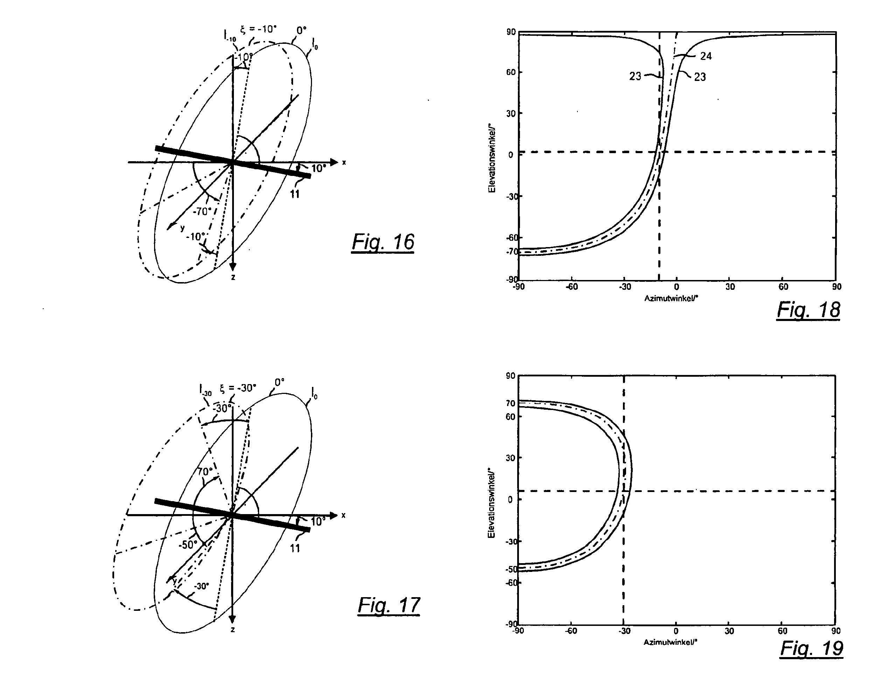

Dies zeigen auch die Fig. 16 bis 19, welche weitgehend den Fig. 8 bis 11 entsprechen, jedoch nunmehr mit einem Neigungswinkel der Empfangsantenne von $\nu$ = 10°.

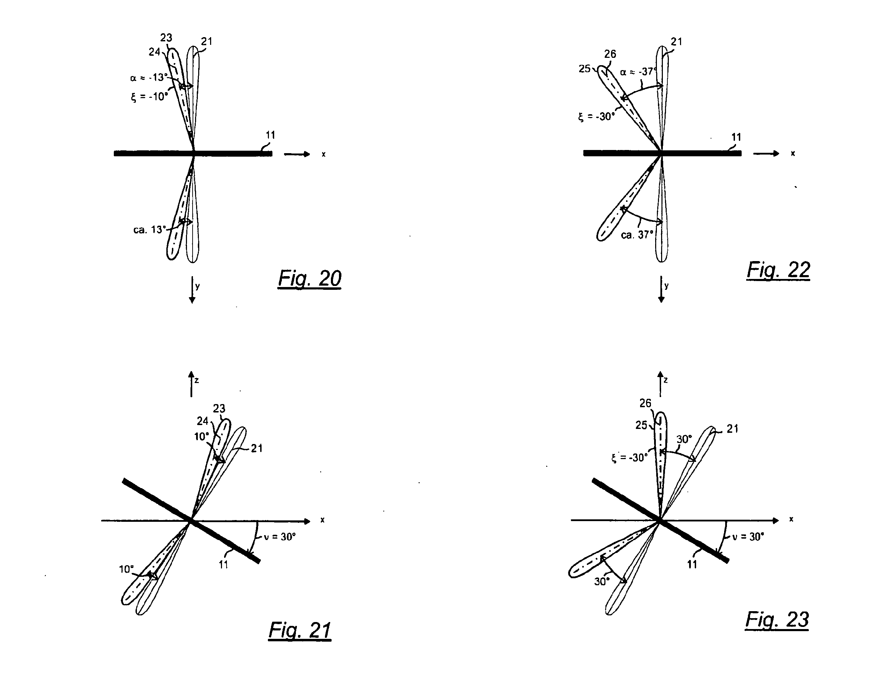

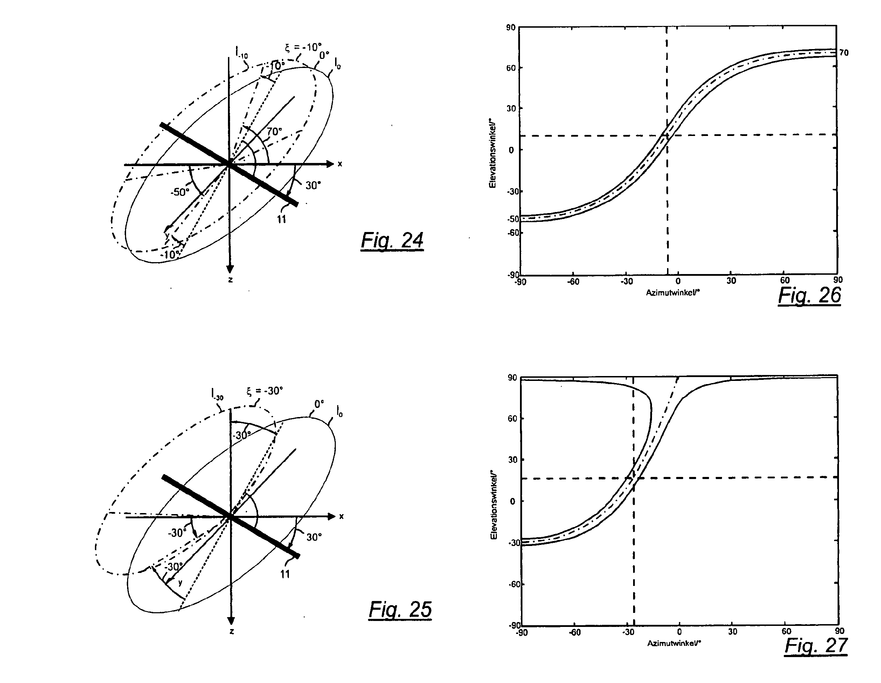

Die Fig. 20 bis 27 entsprechen wiederum den Fig. 4 bis 11 bzw. 12 bis 19, wobei jedoch nunmehr die Empfangsantenne um $\nu$ = 30° geneigt ist.

Im Schnitt mit einer Horizontalebene betrachtet, wandern die Richtfunktionen bei gleichbleibenden Zeitverzögerungskoeffizienten mit zunehmendem Neigungswinkel $\nu$ in Richtung der Längsachse der Empfangsantenne bzw. zu den sog. Endfire-Richtungen der Antenne. Dies führt zu Peilungsfehlern in Abhängigkeit der Neigung $\nu$ der Empfangsantenne. Hinzu kommt, dass die Richtfunktionen asymmetrisch werden, was in den erläuterten Zeichnungen jedoch nicht berücksichtigt ist.

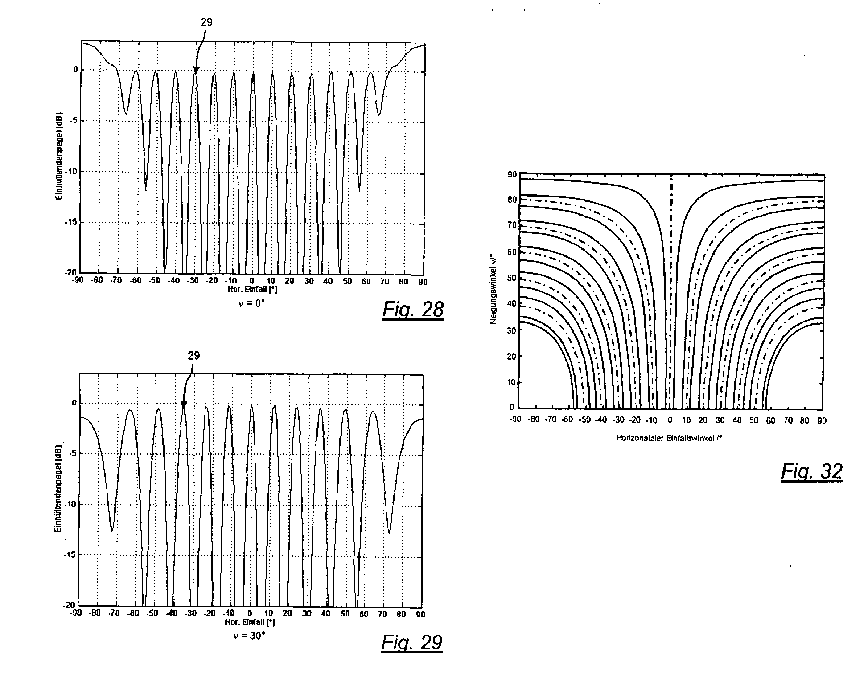

Die Fig. 28 und 29 sind Pegeldiagramme der in den Fig. 2 und 3 gezeigten Richtfunktionen, wobei Fig. 28 die Situation beschreibt, bei der die Empfangsantenne nicht geneigt ist, und Fig. 29 die Situation beschreibt, bei der die Empfangsantenne um 30° geneigt ist. Bei diesen Darstellungen gemäß den Fig. 28 und 29 sind die Richtfunktionen energetisch über den Azimutwinkel summiert, d.h. quadratisch für jeden Azimutwinkel addiert. Anschließend ist die Wurzel aus der Summe gezogen worden. Man erkennt, dass die zur Richtcharakteristik 25 (d.h. bei - 30°) gehörende Spitze 29 einer nicht-geneigten Empfangsantenne gemäß Fig. 28 von etwa -30° nach etwa -37° gemäß Fig. 29 bei einem Neigungswinkel der Empfangsantenne von $\nu$ = 30° wandert.

Die Fig. 30 und 31 veranschaulichen die in den Fig. 28 und 29 dargestellte Situation für alle dreizehn Richtfunktionen gemäß den Fig. 2 und 3. In den Fig. 30 und 31 wird davon ausgegangen, dass die Empfangsantenne eine Neigung von 30° aufweist. Die räumlichen Richtfunktionen sind jeweils um $\xi$ = +/-10°, 20°, 30°, 40°, 50° und 60° zur Querabrichtung geschwenkt. Dies ergibt sich aus der Darstellung gemäß Fig. 31, welche einen Vertikalschnitt, d.h. einen Schnitt in der x-z-Ebene zeigt. Im Horizontalschnitt gemäß Fig. 30 ist jedoch gegenüber der Fig. 2 die Verschiebung der Keulen deutlich sichtbar. Ebenso ist diese Verschiebung der Keulen aus einem Vergleich der Fig. 28 und 29 sichtbar.

Fig. 32 veranschaulicht in einem weiteren Diagramm die Verschiebung der Keulen in Abhängigkeit des Neigungswinkels $\nu$. Man erkennt, dass je stärker die Empfangsantenne geneigt ist, desto weiter die Richtfunktionen nach außen, d.h. in Richtung der Längserstreckung der Empfangsantenne aufgefächert werden.

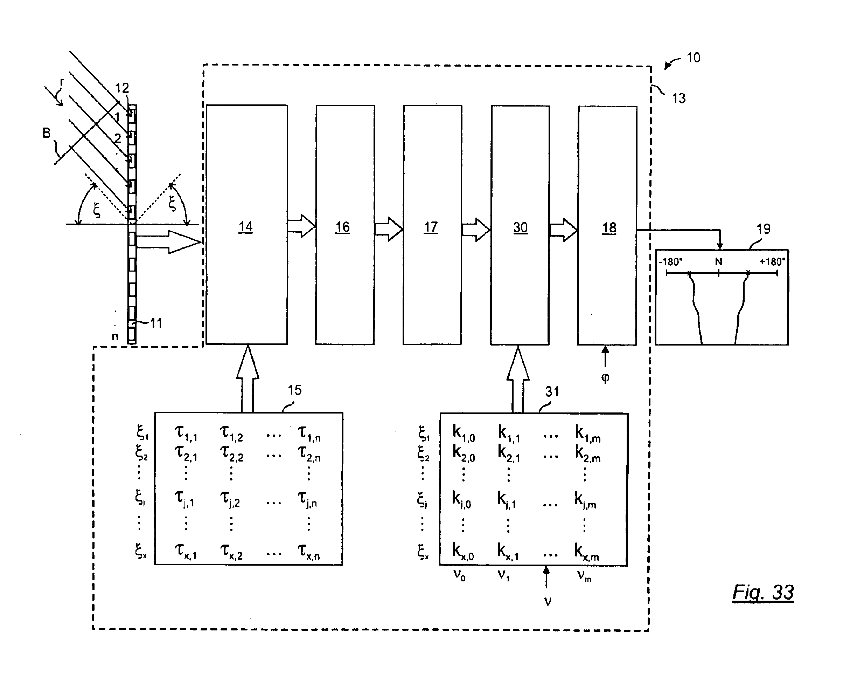

Fig. 33 zeigt ein erstes Ausführungsbeispiel der in Fig. 1 gezeigten Peilanlage 10. Gleiche Bezugsziffern bezeichnen gleiche funktionale Einheiten. Fig. 33 veranschaulicht jedoch detaillierter die Peilanlage bzw. das Peilverfahren mit seinen einzelnen Komponenten bzw. Schritten. Dem Richtungsbildner 14 werden aus dem Datenspeicher 15 für jede auf die Empfangsantenne 11 bezogenen Peilwinkel $\xi$ verschiedene Zeitverzögerungskoeffizienten $\tau$ zur Verfügung gestellt. D.h. für einen ersten antennenbezogenen Peilwinkel $\xi_1$ werden dem Richtungsbildner 14 Zeitverzögerungskoeffizienten $\tau_{j,1}$, $\tau_{j,2}$, ..., $\tau_{j,n}$ zur Verfügung gestellt. Jedem Wandler 12 wird somit ein Zeitverzögerungskoeffizient zugeordnet und zwar je einer für jeden antennenbezogenen Peilwinkel $\xi_1$, $\xi_2$, ..., $\xi_j$, ..., $\xi_x$.

Insgesamt könnten auf diese Weise x verschiedene Winkel berücksichtigt werden, so dass der Richtungsbildner x Richtfunktionen erzeugt. Die Zeitverzögerungskoeffizienten $\tau_{j,1}$, $\tau_{j,2}$, ..., $\tau_{j,n}$ sind im Datenspeicher 15 beispielsweise als Tabelle hinterlegt. Mittels dieser Zeitverzögerungskoeffizienten $\tau_{j,1}$, $\tau_{j,2}$, ..., $\tau_{j,n}$ bildet der Richtungsbildner 14 für jeden antennenbezogenen Peilwinkel $\xi_1$, $\xi_2$, ... , $\xi_j$, ... , $\xi_x$ konphase Empfangssignale.

Wie oben erläutert, werden diese Empfangssignale in der Gruppensignalsverarbeitungseinheit 16 addiert und sodann Intensitätswerte, insbesondere Pegel, der Gruppensignale in Zuordnung zu den antennenbezogenen Peilwinkeln $\xi_1$, $\xi_2$, ..., $\xi_j$, ... , $\xi_x$ ermittelt. Aus den ermittelten Intensitätswerten bzw. Pegeln wird dann ein resultierender Intensitätsverlauf bzw. Pegelverlauf über den antennenbezogene Peilwinkel $\xi_1$, $\xi_2$, ..., $\xi_j$, ..., $\xi_x$ erstellt.

Der Maximumdetektor 17 ermittelt dann aus dem Intensitätsverlauf bzw. Pegelverlauf lokale Maxima und ordnet diesen lokalen Maxima Zielen zugeordnete Peilwinkel (zielzugehörige Peilwinkel) zu.

Die als Korrektureinheit 30 ausgebildeten Korrekturmittel korrigieren die auf diese Weise erhaltenen zielzugehörigen Peilwinkel und zwar indem jeweils ein bestimmter Korrekturwert k mit dem zielzugehörigen Peilwinkel verrechnet wird. Der Korrekturwert k wird dabei aus einem Datenspeicher 31 zum Speichern von Korrekturwerten $k_{1,0}$, $k_{1,1}$, ..., $k_{1,m}$; ... ; $k_{j,0}$, $k_{j,1}$, ..., $k_{j,m}$; ... ; $k_{x,0}$, $k_{x,1}$, ..., $k_{x,m}$ ausgelesen und der Korrektureinheit 30 zugeführt. Der jeweilige Korrekturwert k ist dabei abhängig von der Neigung $\nu$ der Empfangsantenne 11 sowie von dem antennenbezogenen Peilwinkel $\xi$. D.h. der jeweilige Korrekturwert k wird in Anhängigkeit von der Neigung $\nu$ der Empfangsantenne 11 und dem antennenbezogenen Peilwinkel $\xi$ aus dem Datenspeicher 31 ausgelesen. Für jeden antennenbezogene Peilwinkel $\xi$ weist daher der Datenspeicher für jede Neigung $\nu$ bzw. für jeden Neigungswinkelbereich, indem dicht beieinander liegende Neigungswinkel $\nu$ zusammengefasst sind, einen Korrekturwert k auf.

Auf diese Weise erhält man korrigierte zielzugehörigen Peilwinkel, welche dann der Transformationseinheit 18 zugeführt werden. Diese Transformationseinheit 18 rechnet die zielzugehörigen Peilwinkel derart um, dass sie auf Nord bezogen sind. Die Transformation auf Nord mittels der Transformationseinheit 18 kann jedoch auch vor der Korrektur mittels der Korrektureinheit 30 stattfinden.

Wie bereits oben erläutert, werden die auf diese Weise erhaltenen nordbezogenen zielzugehörigen Peilwinkel auf einer Ausgabeeinheit 19 dargestellt.

Die im Datenspeicher 31 gespeicherten Korrekturwerte $k_{1,0}$, $k_{1,1}$, ..., $k_{1,m}$; ...; $k_{j,0}$, $kj_{,1}$, ..., $k_{j,m}$; ...; $k_{x,0}$, $k_{x,1}$, ..., $k_{x,m}$ werden empirisch bestimmt oder analytisch oder numerisch berechnet. Ein empirisches Bestimmen bzw. ein numerisches Berechnen dieser Korrekturwerte bietet sich vorteilhafterweise insbesondere bei komplex ausgebildeten Empfangsantennen an, die sich nicht mit einfachen Gleichungen beschreiben lassen. Insbesondere empfiehlt sich diese Vorgehensweise bei gekrümmten Antennenkonfigurationen, z.B. bei Zylinderbasen.

Bei dem anhand von Fig. 33 beschriebenen Ausführungsbeispiel wird die Signalverarbeitung in weiten Teilen auf herkömmliche Weise betrieben, wobei jedoch die Zielpeilung vor der Darstellung des Ziels auf entsprechenden Darstellungsgeräten korrigiert wird. Bspw. kann dazu ein entsprechender Ziel-Tracker um den entsprechenden Korrekturwert verschoben werden. Bei diesem Ausführungsbeispiel wird jedoch die Verzerrung der Richtfunktionen aufgrund der Neigung der Empfangsantenne beibehalten. Die Zeitverzögerungskoeffizienten sind daher die gleichen wie bei einer nicht-geneigten Empfangsantenne 11.

Bei den nachfolgend erläuterten Ausführungsbeispielen erfolgt jedoch ein Eingriff in die Signalverarbeitung bereits an früherer Stelle. Und zwar werden die Richtfunktionen durch Anwendung veränderter Zeitverzögerungskoeffizienten derart verschwenkt, dass in einer Horizontalebene die einem antennenbezogenen Peilwinkel zugeordnete Antennen-Richtfunktion ihre (horizontale) Hauptempfangsrichtung $\alpha$ unabhängig vom Neigungswinkel $\nu$ beibehält. D.h., die horizontalen Hauptempfangsrichtungen $\alpha$ der Richtfunktionen entsprechen auch bei unterschiedlichen Neigungswinkeln $\nu$ der Empfangsantenne 11 einander.

Fig. 34 und 35 veranschaulichen diese Idee. Es wird wieder davon ausgegangen, dass die Empfangsantenne eine Neigung von 30° aufweist. Die horizontalen Hauptempfangsrichtungen betragen nunmehr $\alpha$ = +/- 10°, 20°, 30°, 40°, 50° und 60° zur Querabrichtung. Fig. 34 zeigt dabei wiederum einen Horizontalschnitt, während Fig. 35 einen Vertikalschnitt darstellt. Durch Veränderung der Zeitverzögerungskoeffizienten in Abhängigkeit des Neigungswinkels $\nu$ sind die räumlichen Richtfunktionen nunmehr derart ausgebildet, dass im Horizontalschnitt die horizontalen Hauptempfangsrichtungen der Richtfunktionen der in Fig. 2 dargestellten Situationen entsprechen. Ohne eine Anpassung der Zeitverzögerungskoeffizienten ergäbe sich die bereits im Zusammenhang mit Fig. 30 erläuterte Anordnung der Richtfunktionen. Die Veränderung der Zeitverzögerungskoeffizienten bewirkt jedoch zugleich eine Veränderung der räumlichen Richtfunktionen im Vertikalschnitt. Dies ist nur sehr grob in Fig. 35 dargestellt. Im Wesentlichen wird der Fächer der Richtfunktionen im Vertikalschnitt im Vergleich zur Situation gemäß Fig. 31 gestaucht. Allerdings ergeben sich Asymmetrien; dies gilt im Übrigen auch für Fig. 34.

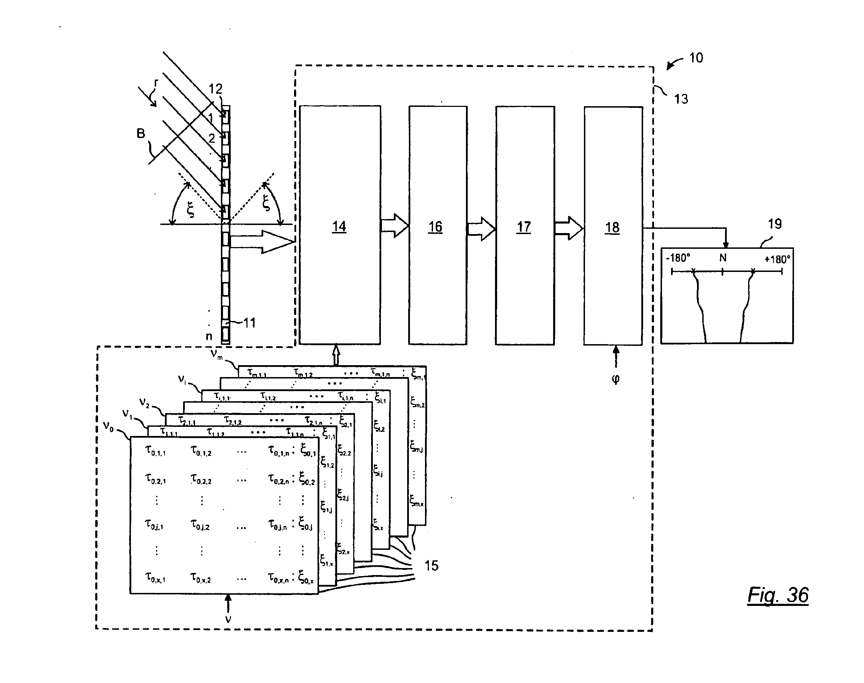

Fig. 36 zeigt ein zweites Ausführungsbeispiel, bei dem die Zeitverzögerungskoeffizienten in Abhängigkeit des Neigungswinkels $\nu$ verändert werden. Dieses Ausführungsbeispiel entspricht im Hinblick auf die Empfangsantenne 11, die Wandler 12, den Richtungsbildner 14, die Gruppensignalverarbeitungseinheit 16, den Maximumdetektor 17, der Transformationseinheit 18 und der Ausgabeeinheit 19 dem in Fig. 33 dargestellten Ausführungsbeispiel, so dass auf die obigen Erläuterungen Bezug genommen wird.

Jedoch wird dem Richtungsbildner 14 nunmehr jeweils eine vom Neigungswinkel $\nu$ abhängige Tabelle mit Zeitverzögerungskoeffizienten zugeführt. D.h., dass für einen Neigungswinkel $\nu_0$ und für einen antennenbezogenen Peilwinkel $\xi_{0j}$ Zeitverzögerungskoeffizienten $\tau_{0,j,1}$, $T_{0,j,2}$, ..., $\tau_{0,j,n}$ bereitgestellt werden.

Für einen Neigungswinkel $\nu_1$ ergeben sich dann in entsprechender Weise Zeitverzögerungskoeffizienten $\tau_{1,j,1}$, $\tau_{1,j,2}$, ..., $\tau_{1,j,n}$. Allgemein ergeben sich somit für einen Neigungswinkel $\nu_i$ Zeitverzögerungskoeffizienten von $\tau_{i,j,1}$, $\tau_{i,j,2}$, ..., $\tau_{i,j,n}$.

Diese Zeitverzögerungskoeffizienten sind wiederum im Datenspeicher 15 hinterlegt, der jedoch im Vergleich zu Fig. 33 nunmehr eine größere Anzahl von Speicherplätzen aufweist.

Die Zeitverzögerungskoeffizienten $\tau_{0,j,1}$, $\tau_{0,j,2}$, ..., $\tau_{0,j,n}$; $\tau_{1,j,1}$, $\tau_{1,j,2}$, ..., $\tau_{1,j,n}$; $\tau_{2,j,1}$, $\tau_{2,j,2}$, ..., $\tau_{2,j,n}$; ...; $\tau_{i,j,1}$, $\tau_{i,j,2}$, ..., $\tau_{i,j,n}$; ...; $\tau_{m,j,1}$, $\tau_{m,j,2}$, ..., $\tau_{m,j,n}$ sind vorteilhafterweise derart gewählt, dass für jeweils einen bestimmten Neigungswinkel $\nu_0$, $\nu_1$, $\nu_2$, ..., $\nu_i$, ..., $\nu_m$ bzw. Neigungswinkelbereiche die horizontalen Hauptempfangsrichtungen $\alpha$ der Antennen-Richt-

funktionen, d.h. im Schnitt mit einer Horizontalebene, in gleichen Winkelabständen angeordnet sind.

Bei dem in Fig. 36 gezeigten Ausführungsbeispiel stellt die Signalverarbeitungseinrichtung 13 für jeden Neigungswinkel der Empfangsantenne bzw. für eng begrenzte Neigungswinkelbereiche jeweils eigene Tabellen zur Verfügung, die dem Richtungsbildner 14 zum Bilden der konphasen Empfangssignale zugeführt werden. Diese Zeitverzögerungskoeffizienten werden entweder empirisch ermittelt oder rechnerisch bestimmt.

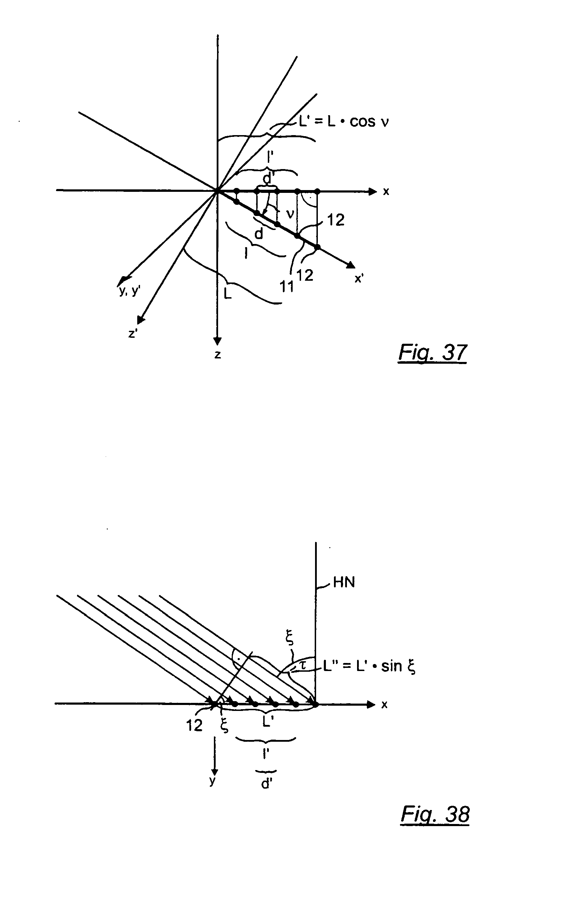

Eine analytische rechnerische Bestimmung lässt sich anhand der Fig. 37 und 38 erläutern. Die Empfangsantenne 11 ist um den Winkel $\nu$ gegenüber der x-y-Ebene geneigt. Das x, y, z-Koordinatensystem ist ein raumfestes kartesisches Koordinatensystem, während das x', y', z'-Koordinatensystem ein antennengebundenes kartesisches Koordinatensystem ist. Die z-Achse ist im dargestellten Beispiel die Drehachse von ebenen horizontal einfallenden Schallwellen. Die Einfallsrichtung dieser Schallwellen schwenkt also in der x-y-Ebene.

Die Antennenlänge L = (n-1) • d einer Linearantenne mit n jeweils im Abstand d voneinander angeordneten benachbarten Wandlern 12 bzw. der Abstand I zweier beliebiger Wandler 12 wird durch die Neigung um den Neigungswinkel $\nu$ verkürzt in die x-y-Ebene projiziert, so dass sich die verkürzte Länge ergibt zu L' = L • cos $\nu$. Eine entsprechende Verkürzung ergibt sich für den Abstand d zu d' = d • cos $\nu$ bzw. für den Abstand I zu I' = I • cos v. Die Projektion der Wandler in der z-Richtung auf die x-y-Ebene hat bzgl. der einfallenden Schallwellen keine Wirkung, da diese als ebene Horizontalwellen einfallen. Dies wird jedenfalls näherungsweise der Einfachheit halber für die Betrachtungen im Zusammenhang mit der vorliegenden Erfindung angenommen. Auf diese Weise ist die Berechnung der Richtfunktionen der Empfangsantenne 12 wieder auf den ebenen Fall, d.h. den Fall einer nicht-geneigten Empfangsantenne ($\nu$ = 0) zurückgeführt.

Fig. 38 zeigt eine ebene Welle, die im Winkel $\xi$ gegen die Hauptnormale HN der Empfangsantenne und zwar die auf der Horizontalebene projizierte Empfangsantenne erreicht. In dem in Fig. 38 gezeigten Beispiel wird zuerst der äußerst linke Wandler 12 und erst nach einer Zeitverzögerung $\tau$ der äußerst rechte Wandler erreicht. Um ein entsprechendes konphases Gruppensignal zu bilden, muss der Empfangssignalwert des äußersten linken Wandlers um $\tau$ verzögert mit dem Empfangssignalwert des äußersten rechten Wandlers zusammengefasst werden. Die dieser Verzögerung $\tau$ entsprechende Entfernung beträgt L'' = L' • sin $\xi$.

Mit der Schalllaufzeit $c_o$ ergibt sich

$$L'' = c_o \bullet \tau = L' \bullet \sin \xi = L \bullet \cos \nu \bullet \sin \xi.$$

Löst man obige Gleichung nach $\tau$ auf, erhält man für die Laufzeitverzögerung $\tau_L$ zwischen den beiden sich im Abstand L voneinander befindenden äußersten Wandlern:

$$\tau_L = ([L \bullet \cos \nu] / c_o) \bullet \sin \xi$$

Die Laufzeitverzögerung $\tau_I$ zweier beliebiger sich im Abstand I voneinander befindender Wandler ergibt sich in entsprechender Weise zu:

$$\tau_I = ([I \bullet \cos \nu] / c_o) \bullet \sin \xi$$

Die Laufzeitverzögerung $\tau_k$ zwischen einem der beiden äußersten Wandler und dem k-ten Wandler ergibt sich in analoger Weise zu:

$$\tau_k = ([(k-1) \bullet d \bullet \cos \nu] / c_o) \bullet \sin \xi \quad \text{mit} \quad k=1, 2, ..., n.$$

Die Laufzeitverzögerungen sind jeweils abhängig vom Neigungswinkel $\nu$ und von dem antennenbezogenen

Peilwinkel $\xi$.

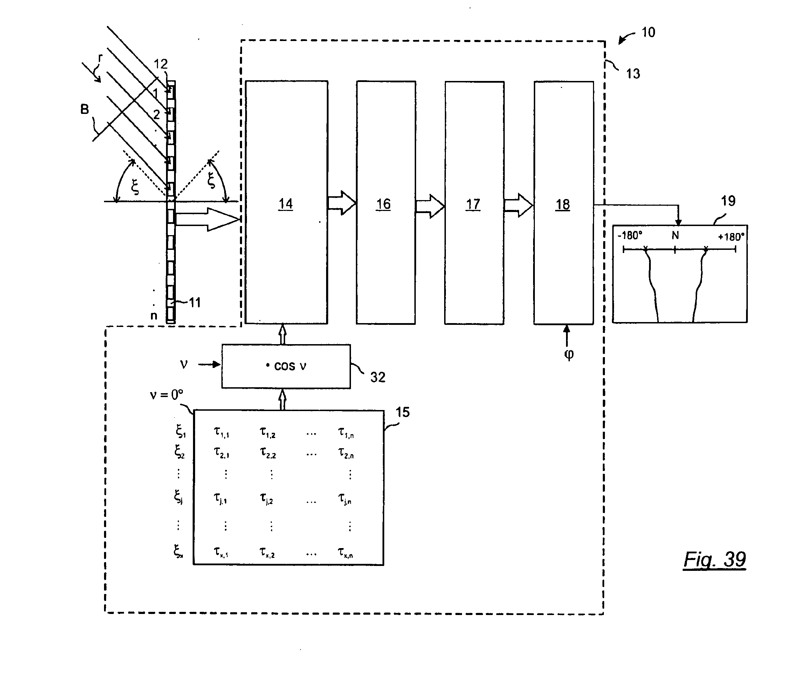

Aufgrund dieser Erkenntnis lässt sich ein weiteres Ausführungsbeispiel gemäß Fig. 39 angeben. Dieses entspricht wiederum weitgehend dem in Fig. 36 gezeigten Ausführungsbeispiel, wobei jedoch nunmehr dem Richtungsbildner 14 noch ein Multiplizierer 32 vorgeschaltet ist. Dieser Multiplizierer 32 erhält den Neigungswinkel $\nu$ und multipliziert den Cosinus des Neigungswinkels $\nu$ mit einem aus dem Datenspeicher 15 ausgelesenen Zeitverzögerungswert, der für eine nicht-geneigte Empfangsantenne hinterlegt ist. Somit erhält man den entsprechenden Satz von Zeitverzögerungskoeffizienten für eine um den Neigungswinkel $\nu$ geneigte Empfangsantenne, der dann im Richtungsbildner 14 weiter verarbeitet wird.

Bei alternativen Peilanlagen kann die rechnerische Schallgeschwindigkeit, mit der die Peilanlage rechnet, unabhängig von der tatsächlichen Schallgeschwindigkeit im Medium eingestellt werden. Multipliziert man diese rechnerische Schallgeschwindigkeit mit dem Faktor 1/cos $\nu$, kann man eine herkömmliche Peilanlage derart verändern, dass die Richtfunktionen unabhängig vom Neigungswinkel im Wesentlichen die gleiche horizontale Orientierung aufweisen wie bei einer nicht-geneigten Empfangsantenne. Vorteilhafterweise weist daher eine Peilanlage (nicht dargestellt) Mittel zum Multiplizieren einer der Signalverarbeitungseinrichtung zuführbaren rechnerischen Schallgeschwindigkeit mit dem Faktor 1/cos $\nu$ auf.

**Patentansprüche**

1. Verfahren zum Peilen von schallabstrahlenden Zielen unter Verwendung einer Empfangsantenne (11) mit einer Vielzahl (n) von elektroakustischen Wandlern (12) zum Empfangen von Schallwellen und Erzeugen von elektrischen Empfangssignalen, wobei die Empfangssignale zum Bilden von Antennen-Richtfunktionen (22, 23, 25) mit horizontalen Hauptempfangsrichtungen einer Signalverarbeitung unterzogen werden, die folgende Schritte umfasst:

   - Anwenden von Zeitverzögerungskoeffizienten ($\tau$) auf die Empfangssignale zum Bilden konphaser Empfangssignale und
   - Addieren der konphasen Empfangssignale zu Gruppensignalen, welche in Abhängigkeit von den jeweiligen Zeitverzögerungskoeffizienten ($\tau$) auf die Empfangsantenne (11) bezogenen Peilwinkeln ($\xi$), sog. antennenbezogenen Peilwinkeln ($\xi$), zugeordnet sind,
   - Ermitteln von Intensitätswerten, insbesondere von Pegeln, der Gruppensignale in Zuordnung zu den antennenbezogenen Peilwinkeln ($\xi$),
   - Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$),
   - Ermitteln von lokalen Maxima im Intensitätsverlauf, insbesondere von lokalen Pegelmaxima im Pegelverlauf, und
   - Zuordnen von Zielen zugeordneten, in einer Horizontalebene liegenden Peilwinkeln, sog. zielzugehörigen Peilwinkein, zu antennenbezogenen Peilwinkeln entsprechend der lokalen Maxima, insbesondere Pegelmaxima, in Abhängigkeit von einem Neigungswinkel ($\nu$) der Empfangsantenne (11) gegenüber einer Horizontalebene, indem die zielzugehörigen Peilwinkel um einen vom Neigungswinkel ($\nu$) und vom antennenbezogenen Peilwinkel ($\xi$) abhängigen Korrekturwert (k) korrigiert werden.

2. Verfahren zum Peilen von schallabstrahlenden Zielen unter Verwendung einer Empfangsantenne (11) mit einer Vielzahl (n) von elektroakustischen Wandlern (12) zum Empfangen von Schallwellen und Erzeugen von elektrischen Empfangssignalen, wobei die Empfangssignale zum Bilden von Antennen-Richtfunktionen (22, 23, 25) mit horizontalen Hauptempfangsrichtungen einer Signalverarbeitung unterzogen werden, die folgende Schritte umfasst:

   - Anwenden von Zeitverzögerungskoeffizienten ($\tau$) auf die Empfangssignale zum Bilden konphaser Empfangssignale und
   - Addieren der konphasen Empfangssignale zu Gruppensignalen, welche in Abhängigkeit von den jeweiligen Zeitverzögerungskoeffizienten ($\tau$) auf die Empfangsantenne (11) bezogenen Peilwinkeln ($\xi$), sog. antennenbezogenen Peilwinkeln ($\xi$), zugeordnet sind, wobei die Zeitverzögerungskoeffizienten ($\tau$) in Abhängigkeit von einem Neigungswinkel ($\nu$) der Empfangsantenne (11) gegenüber einer Horizontalebene bestimmt werden,
   - Ermitteln von Intensitätswerten, insbesondere von Pegeln, der Gruppensignale in Zuordnung zu den antennenbezogenen Peilwinkeln ($\xi$),
   - Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$),
   - Ermitteln von lokalen Maxima im Intensitätsverlauf, insbesondere von lokalen Pegelmaxima im Pegelverlauf, und

- Zuordnen von Zielen zugeordneten, in einer Horizontalebene liegenden Peilwinkeln, sog. zielzugehörigen Peilwinkeln, zu antennenbezogenen Peilwinkein entsprechend der lokalen Maxima, insbesondere Pegelmaxima, in Abhängigkeit vom Neigungswinkel ($\nu$), indem in einem vorgegebenen Winkelbereich des Neigungswinkels ($\nu$), insbesondere für Neigungswinkel ($\nu$), deren Betrag kleiner als 45° ist ($|\nu| < 45°$), für jeden Neigungswinkel ($\nu_0$, $\nu_1$, $\nu_2$, ..., $\nu_i$, ..., $\nu_m$) oder für eine Mehrzahl von Neigungswinkelbereichen für eine Anzahl von antennenbezogenen Peilwinkeln ($\xi_{i,1}$, $\xi_{i,2}$, ..., $\xi_{i,j}$, ..., $\xi_{i,x}$) jeweils ein für einen bestimmten antennenbezogenen Peilwinkel ($\xi_{i,j}$) vorgesehener Satz von Zeitverzögerungskoeffizienten ($\tau_{i,j,1}$, $\tau_{i,j,2}$, ..., $\tau_{i,j,n}$) zum Bilden mehrerer jeweils eine oder zwei horizontale Hauptempfangsrichtungen ($\alpha$) aufweisende Antennen-Richtfunktionen (22, 23, 25) bereitgestellt wird und

die Sätze von Zeitverzögerungskoeffizienten ($\tau_{0,j,1}$, $\tau_{0,j,2}$, ..., $\tau_{0,j,n}$; $\tau_{1,j,1}$, $\tau_{1,j,2}$, ..., $\tau_{1,j,n}$; $\tau_{2,j,1}$, $\tau_{2,j,2}$, ..., $\tau_{2,j,n}$; ...; $\tau_{i,j,1}$, $\tau_{i,j,2}$, ..., $\tau_{i,j,n}$; ...; $\tau_{m,j,1}$, $\tau_{m,j,2}$, ..., $\tau_{m,j,n}$) derart bestimmt sind, dass einander entsprechende Antennen-Richtfunktionen (22, 23, 25) verschiedener Neigungswinkel ($\nu_0$, $\nu_1$, $\nu_2$, ..., $\nu_i$, ..., $\nu_m$) bzw. Neigungswinkelbereiche gleiche horizontale Hauptempfangsrichtungen ($\alpha$) aufweisen.

3. Verfahren zum Peilen von schallabstrahlenden Zielen unter Verwendung einer Empfangsantenne (11) mit einer Vielzahl (n) von elektroakustischen Wandlern (12) zum Empfangen von Schallwellen und Erzeugen von elektrischen Empfangssignalen, wobei die Empfangssignale zum Bilden von Antennen-Richtfunktionen (22, 23, 25) mit horizontalen Hauptempfangsrichtungen einer Signalverarbeitung unterzogen werden, die folgende Schritte umfasst:

- Anwenden von Zeitverzögerungskoeffizienten ($\tau$) auf die Empfangssignale zum Bilden konphaser Empfangssignale und
- Addieren der konphasen Empfangssignale zu Gruppensignalen, welche in Abhängigkeit von den jeweiligen Zeitverzögerungskoeffizienten ($\tau$) auf die Empfangsantenne (11) bezogenen Peilwinkeln ($\xi$), sog. antennenbezogenen Peilwinkeln ($\xi$), zugeordnet sind, wobei die Zeitverzögerungskoeffizienten ($\tau$) in Abhängigkeit von einem Neigungswinkel ($\nu$) der Empfangsantenne (11) gegenüber einer Horizontalebene bestimmt werden,
- Ermitteln von Intensitätswerten, insbesondere von Pegeln, der Gruppensignale in Zuordnung zu den antennenbezogenen Peilwinkeln ($\xi$),
- Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$),
- Ermitteln von lokalen Maxima im Intensitätsverlauf, insbesondere von lokalen Pegelmaxima im Pegelverlauf, und
- Zuordnen von Zielen zugeordneten, in einer Horizontalebene liegenden Peilwinkeln, sog. zielzugehörigen Peilwinkeln, zu antennenbezogenen Peilwinkeln entsprechend der lokalen Maxima, insbesondere Pegelmaxima in Abhängigkeit vom Neigungswinkel ($\nu$), indem die Zeitverzögerungskoeffizienten ($\tau_{1,1}$, $\tau_{1,2}$, ..., $\tau_{1,n}$; $\tau_{2,1}$, $\tau_{2,2}$, ..., $\tau_{2,n}$; ...; $\tau_{j,1}$, $\tau_{j,2}$, ..., $\tau_{j,n}$; ...; $\tau_{x,1}$, $\tau_{x,2}$, ..., $\tau_{x,n}$) einer horizontal ausgerichteten Empfangsantenne (11) mit dem Faktor cos $\nu$ multipliziert werden.

4. Verfahren zum Peilen von schallabstrahlenden Zielen unter Verwendung einer Empfangsantenne (11) mit einer Vielzahl (n) von elektroakustischen Wandlern (12) zum Empfangen von Schallwellen und Erzeugen von elektrischen Empfangssignalen, wobei die Empfangssignale zum Bilden von Antennen-Richtfunktionen (22, 23, 25) mit horizontalen Hauptempfangsrichtungen einer Signalverarbeitung unterzogen werden,
wobei die Signalverarbeitung Zielen zugeordnete, in einer Horizontalebene liegende Peilwinkel, sog. zielzugehörige Peilwinkel, in Abhängigkeit von einem Neigungswinkel ($\nu$) der Empfangsantenne (11) gegenüber einer Horizontalebene berechnet,
und eine der Signalverarbeitung zuführbare rechnerische Schallgeschwindigkeit mit dem Faktor 1/cos $\nu$ multipliziert wird, wobei $\nu$ den Neigungswinkel bezeichnet.

5. Verfahren nach Anspruch 4, wobei die Signalverarbeitung folgende Schritte aufweist:

- Anwenden von Zeitverzögerungskoeffizienten ($\tau$) auf die Empfangssignale zum Bilden konphaser Empfangssignale,
- Addieren der konphasen Empfangssignale zu Gruppensignalen, welche in Abhängigkeit von den jeweiligen Zeitverzögerungskoeffizienten ($\tau$) auf die Empfangsantenne (11) bezogenen Peilwinkeln ($\xi$), sog. antennenbezogenen Peilwinkeln ($\xi$), zugeordnet sind,
- Ermitteln von Intensitätswerten, insbesondere von Pegeln, der Gruppensignale in Zuordnung zu den antennenbezogenen Peilwinkeln ($\xi$),
- Erstellen eines aus den ermittelten Intensitätswerten, insbesondere Pegeln, resultierenden Intensitätsverlaufs, insbesondere Pegelverlaufs, über die antennenbezogenen Peilwinkel ($\xi$),

- Ermitteln von lokalen Maxima im Intensitätsverlauf, insbesondere von lokalen Pegelmaxima im Pegelverlauf, und

- Zuordnen von zielzugehörigen Peilwinkeln zu lokalen Maxima, insbesondere Pegelmaxima.

6. Verfahren nach Anspruch 2, wobei die Zeitverzögerungskoeffizienten ($\tau_{1,1}$, $\tau_{1,2}$, ..., $\tau_{1,n}$; $\tau_{2,1}$, $\tau_{2,2}$, ..., $\tau_{2,n}$; ...; $\tau_{j,1}$, $\tau_{j,2}$, ..., $\tau_{j,n}$; ...; $\tau_{x,1}$, $\tau_{x,2}$, ..., $\tau_{x,n}$) einer nicht geneigten, horizontal ausgerichteten Empfangsantenne (11) mit dem Faktor cos $\nu$ multipliziert werden, um die Zeitverzögerungskoeffizienten für eine um den Neigungswinkel $\nu$ geneigte Empfangsantenne (11) zu erhalten.

7. Verfahren nach Anspruch 2 oder 3, wobei die Sätze von Zeitverzögerungskoeffizienten ($\tau_{0,j,1}$, $\tau_{0,j,2}$, ..., $\tau_{0,j,n}$; $\tau_{1,j,1}$, $\tau_{1,j,2}$, ..., $\tau_{1,j,n}$; $\tau_{2,j,1}$, $\tau_{2,j,2}$, ..., $\tau_{2,j,n}$; ...; $\tau_{i,j,1}$, $\tau_{i,j,2}$, ..., $\tau_{i,j,n}$; ...; $\tau_{m,j,1}$, $\tau_{m,j,2}$, ..., $\tau_{m,j,n}$) derart gewählt sind, dass für jeweils einen bestimmten Neigungswinkel ($\nu_0$, $\nu_1$, $\nu_2$, ..., $\nu_i$, ..., $\nu_m$) bzw. Neigungswinkelbereich die horizontalen Hauptempfangsrichtungen ($\alpha$) der Antennen-Richtfunktionen (22, 23, 25) in gleichen Winkelabständen angeordnet sind.

8. Verfahren nach Anspruch 2, 3 oder 7, wobei als Empfangsantenne (11) eine Linearantenne mit äquidistant angeordneten Wandlern (12) verwendet wird, wobei eine Zeitverzögerung zwischen zwei beabstandet im Abstand I angeordneten Wandlern gemäß

$$\tau_I = ([I \cdot \cos \nu] / c_o) \cdot \sin \xi$$

berechnet wird, wobei $\tau_I$ die Zeitverzögerung, I den Abstand zweier Wandler, $\nu$ den Neigungswinkel, $c_o$ die Schallgeschwindigkeit und $\xi$ den antennenbezogenen Peilwinkel bezeichnet, insbesondere die Zeitverzögerung $\tau_k$ zwischen einem der beiden äußersten Wandler und dem k-ten Wandler gemäß

$$\tau_k = ([(k-1) \cdot d \cdot \cos \nu] / c_o) \cdot \sin \xi \quad \text{mit} \quad k = 1, 2, ..., n$$

berechnet wird, wobei d den Abstand zweier benachbarter Wandler und n die Anzahl der Wandler der Antenne mit der Länge L = n $\cdot$ d bezeichnet.

9. Peilanlage zum Peilen von schallabstrahlenden Zielen mittels einer Empfangsantenne (11) mit einer Vielzahl (n) von elektroakustischen Wandlern (12) zum Empfangen von Schallwellen und Erzeugen von elektrischen Empfangssignalen, mit einer Signalverarbeitungseinrichtung (13) zum Bilden von Antennen-Richtfunktionen (22, 23, 25) mit horizontalen Hauptempfangsrichtungen, der die Empfangssignale zur Signalverarbeitung zuführbar sind und die aufweist:

- einen Richtungsbildner (14) zum Anwenden von Zeitverzögerungskoeffizienten ($\tau$) auf die Empfangssignale zum Bilden konphaser Empfangssignale,
- eine Gruppensignalverarbeitungseinheit (16), die zum Addieren der konphasen Empfangssignale zu Gruppensignalen ausgebildet ist, welche in Abhängigkeit von den jeweiligen Zeitverzögerungskoeffizienten ($\tau$) auf die Empfangsantenne bezogenen Peilwinkeln ($\xi$), sog. antennenbezogenen Peilwinkeln ($\xi$), zugeordnet sind, wobei die Gruppensignalverarbeitungseinheit (16) ferner zum Ermitteln von Intensitätswerten, insbesondere von Pegeln, der Gruppensignale in Zuordnung zu den antennenbezogenen Peilwinkeln ($\xi$) und zum Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$) ausgebildet ist,
- einen Maximumdetektor (17) zum Ermitteln von lokalen Maxima im Intensitätsverlauf, insbesondere von lokalen Pegelmaxima im Pegelverlauf, und zum Zuordnen von Zielen zugeordneten, in einer Horizontalebene liegenden Peilwinkeln, sog. zielzugehörigen Peilwinkeln, zu antennenbezogenen Peilwinkeln entsprechend der lokalen Maxima, insbesondere Pegelmaxima, und
- Mittel (20), um die zielzugehörigen Peilwinkel in Abhängigkeit von einem Neigungswinkel ($\nu$) der Empfangsantenne (11) gegenüber einer Horizontalebene zu berechnen, die Mittel (30) zum Korrigieren der zielzugehörigen Peilwinkel um einen vom Neigungswinkel ($\nu$) und von dem antennenbezogenen Peilwinkel ($\xi$) abhängigen Korrekturwert (k) umfassen.

**10.** Peilanlage zum Peilen von schallabstrahlenden Zielen mittels einer Empfangsantenne (11) mit einer Vielzahl (n) von elektroakustischen Wandlern (12) zum Empfangen von Schallwellen und Erzeugen von elektrischen Empfangssignalen, mit einer Signalverarbeitungseinrichtung (13) zum Bilden von Antennen-Richtfunktionen (22, 23, 25) mit horizontalen Hauptempfangsrichtungen, der die Empfangssignale zur Signalverarbeitung zuführbar sind und die aufweist:

- einen Richtungsbildner (14) zum Anwenden von Zeitverzögerungskoeffizienten ($\tau$) auf die Empfangssignale zum Bilden konphaser Empfangssignale,
- eine Gruppensignalverarbeitungseinheit (16), die zum Addieren der konphasen Empfangssignale zu Gruppensignalen ausgebildet ist, welche in Abhängigkeit von den jeweiligen Zeitverzögerungskoeffizienten ($\tau$) auf die Empfangsantenne bezogenen Peilwinkeln ($\xi$), sog. antennenbezogenen Peilwinkeln ($\xi$), zugeordnet sind, wobei die Signalverarbeitungseinrichtung (13) derart ausgebildet ist, um die Zeitverzögerungskoeffizienten ($\tau$) in Abhängigkeit von einem Neigungswinkel ($v$) der Empfangsantenne (11) gegenüber einer Horizontalebene zu bestimmen,
wobei die Gruppensignalverarbeitungseinheit (16) ferner zum Ermitteln von Intensitätswerten, insbesondere von Pegeln, der Gruppensignale in Zuordnung zu den antennenbezogenen Peilwinkeln ($\xi$) und zum Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$) ausgebildet ist,
- einen Maximumdetektor (17) zum Ermitteln von lokalen Maxima im Intensitätsverlauf, insbesondere von lokalen Pegelmaxima im Pegelverlauf, und zum Zuordnen von Zielen zugeordneten, in einer Horizontalebene liegenden Peilwinkeln, sog. zielzugehörigen Peilwinkeln, zu antennenbezogenen Peilwinkeln entsprechend der lokalen Maxima, insbesondere Pegelmaxima, und
- Mittel (20), um die zielzugehörigen Peilwinkel in Abhängigkeit vom Neigungswinkel ($v$) zu berechnen, indem in einem vorgegebenen Winkelbereich des Neigungswinkels ($v$), insbesondere für Neigungswinkel ($v$), deren Betrag kleiner als 45° ist ($|v| < 45°$), für jeden Neigungswinkel ($v_0$, $v_1$, $v_2$, ..., $v_i$, ..., $v_m$) oder für eine Mehrzahl von Neigungswinkelbereichen für eine Anzahl von antennenbezogenen Peilwinkeln ($\xi_{i,1}$, $\xi_{i,2}$, ..., $\xi_{i,j}$, ..., $\xi_{i,x}$) jeweils ein für einen bestimmten antennenbezogenen Peilwinkel ($\xi_{i,j}$) vorgesehener Satz von Zeitverzögerungskoeffizienten ($\tau_{i,j,1}$, $\tau_{i,j,2}$, ..., $\tau_{i,j,n}$) zum Bilden mehrerer jeweils eine oder zwei horizontale Hauptempfangsrichtungen ($\alpha$) aufweisende Antennen-Richtfunktionen (22, 23, 25) bereitgestellt ist und

die Sätze von Zeitverzögerungskoeffizienten ($\tau_{0,j,1}$, $\tau_{0,j,2}$, ..., $\tau_{0,j,n}$; $\tau_{1,j,1}$, $\tau_{1,j,2}$, ..., $\tau_{1,j,n}$; $\tau_{2,j,1}$, $\tau_{2,j,2}$, ..., $\tau_{2,j,n}$; ...; $\tau_{i,j,1}$, $\tau_{i,j,2}$, ..., $\tau_{i,j,n}$; ...; $\tau_{m,j,1}$, $\tau_{m,j,2}$, ..., $\tau_{m,j,n}$) derart bestimmt sind, dass einander entsprechende Antennen-Richtfunktionen (22, 23, 25) verschiedener Neigungswinkel ($v_0$, $v_1$, $v_2$, ..., $v_i$, ..., $v_m$) bzw. Neigungswinkelbereiche gleiche horizontale Hauptempfangsrichtungen ($\alpha$) aufweisen.

**11.** Peilanlage zum Peilen von schallabstrahlenden Zielen mittels einer Empfangsantenne (11) mit einer Vielzahl (n) von elektroakustischen Wandlern (12) zum Empfangen von Schallwellen und Erzeugen von elektrischen Empfangssignalen, mit einer Signalverarbeitungseinrichtung (13) zum Bilden von Antennen-Richtfunktionen (22, 23, 25) mit horizontalen Hauptempfangsrichtungen, der die Empfangssignale zur Signalverarbeitung zuführbar sind und die aufweist:

- einen Richtungsbildner (14) zum Anwenden von Zeitverzögerungskoeffizienten ($\tau$) auf die Empfangssignale zum Bilden konphaser Empfangssignale,
- eine Gruppensignalverarbeitungseinheit (16), die zum Addieren der konphasen Empfangssignale zu Gruppensignalen ausgebildet ist, welche in Abhängigkeit von den jeweiligen Zeitverzögerungskoeffizienten ($\tau$) auf die Empfangsantenne bezogenen Peilwinkeln ($\xi$), sog. antennenbezogenen Peilwinkeln ($\xi$), zugeordnet sind, wobei die Signalverarbeitungseinrichtung (13) derart ausgebildet ist, um die Zeitverzögerungskoeffizienten ($\tau$) in Abhängigkeit von einem Neigungswinkel ($v$) der Empfangsantenne (11) gegenüber einer Horizontalebene zu bestimmen,
wobei die Gruppensignalverarbeitungseinheit (16) ferner zum Ermitteln von Intensitätswerten, insbesondere von Pegeln, der Gruppensignale in Zuordnung zu den antennenbezogenen Peilwinkeln ($\xi$) und zum Erstellen eines aus den ermittelten Intensitätswerten, insbesondere Pegeln, resultierenden Intensitätsverlaufs, insbesondere Pegelverlaufs, über den antennenbezogenen Peilwinkel ($\xi$) ausgebildet ist,
- einen Maximumdetektor (17) zum Ermitteln von lokalen Maxima im Intensitätsverlauf, insbesondere von lokalen Pegelmaxima im Pegelverlauf, und zum Zuordnen von Zielen zugeordneten, in einer Horizontalebene liegenden Peilwinkeln, sog. zielzugehörigen Peilwinkeln, zu antennenbezogenen Pellwinkeln entsprechend der lokalen Maxima, insbesondere Pegelmaxima, und
- Mittel (20), um die zielzugehörigen Peilwinkel in Abhängigkeit vom Neigungswinkel ($v$) zu berechnen, wozu

die Peilanlage (10) einen Multiplizierer (32) aufweist zum Multiplizieren der Zeitverzögerungskoeffizienten ($\tau_{1,1}$, $\tau_{1,2}$, ..., $\tau_{1,n}$; $\tau_{2,1}$, $\tau_{2,2}$, ..., $\tau_{2,n}$; ...; $\tau_{j,1}$, $\tau_{j,2}$, ..., $\tau_{j,n}$; ...; $\tau_{x,1}$, $\tau_{x,2}$, ..., $\tau_{x,n}$) einer horizontal ausgerichteten Empfangsantenne mit dem Faktor cos $\nu$.

**12.** Peilanlage zum Peilen von schallabstrahlenden Zielen mittels einer Empfangsantenne (11) mit einer Vielzahl (n) von elektroakustischen Wandlern (12) zum Empfangen von Schallwellen und Erzeugen von elektrischen Empfangssignalen, mit einer Signalverarbeitungseinrichtung (13) zum Bilden von Antennen-Richtfunktionen (22, 23, 25) mit horizontalen Hauptempfangsrichtungen, der die Empfangssignale zur Signalverarbeitung zuführbar sind,
wobei die Signalverarbeitungseinrichtung (13) Mittel (20) aufweist, um Zielen zugeordnete Peilwinkel, sog. zielzugehörige Peilwinkel, in Abhängigkeit von einem Neigungswinkel (v) der Empfangsantenne (11) gegenüber einer Horizontalebene zu berechnen und
die Peilanlage (10) Mittel zum Multiplizieren einer der Signalverarbeitungseinrichtung zuführbaren rechnerischen Schallgeschwindigkeit mit dem Faktor 1/cos $\nu$ aufweist, wobei $\nu$ den Neigungswinkel bezeichnet.

**13.** Peilanlage nach Anspruch 12, wobei die Signalverarbeitungseinrichtung (13) aufweist:

- einen Richtungsbildner (14) zum Anwenden von Zeitverzögerungskoeffizienten ($\tau$) auf die Empfangssignale zum Bilden konphaser Empfangssignale,
- eine Gruppensignalverarbeitungseinheit (16) zum Addieren der konphasen Empfangssignale zu Gruppensignalen, welche in Abhängigkeit von den jeweiligen Zeitverzögerungskoeffizienten ($\tau$) auf die Empfangsantenne bezogenen Peilwinkeln ($\xi$), sog. antennenbezogenen Peilwinkeln ($\xi$), zugeordnet sind, zum Ermitteln von Intensitätswerten, insbesondere von Pegeln, der Gruppensignale in Zuordnung zu den antennenbezogenen Peilwinkeln ($\xi$) und zum Erstellen eines aus den ermittelten Intensitätswerten, insbesondere Pegeln, resultierenden Intensitätsverlaufs, insbesondere Pegelverlaufs, über die antennenbezogenen Peilwinkel ($\xi$), und
- einen Maximumdetektor (17) zum Ermitteln von lokalen Maxima im Intensitätsverlauf, insbesondere von lokalen Pegelmaxima im Pegelverlauf, und zum Zuordnen von zielzugehörigen Peilwinkeln zu lokalen Maxima, insbesondere Pegelmaxima.

**14.** Peilanlage nach Anspruch 10, die einen Multiplizierer (32) aufweist zum Multiplizieren der Zeitverzögerungskoeffizienten ($\tau_{1,1}$, $\tau_{1,2}$, ..., $\tau_{1,n}$; $\tau_{2,1}$, $\tau_{2,2}$, ..., $\tau_{2,n}$; ... ; $\tau_{j,1}$, $\tau_{j,2}$, ..., $\tau_{j,n}$; ...; $\tau_{x,1}$, $\tau_{x,2}$, ..., $\tau_{x,n}$) einer nicht geneigten, horizontal ausgebildeten Empfangsantenne mit dem Faktor cos $\nu$, um die Zeitverzögerungskoeffizienten für eine um den Neigungswinkel $\nu$ geneigte Empfangsantenne zu erhalten.

**15.** Peilanlage nach Anspruch 10 oder 11, wobei die Empfangsantenne (11) eine Linearantenne mit äquidistant angeordneten Wandlern (12) ist, wobei eine Zeitverzögerung zwischen zwei beabstandet im Abstand I angeordneten Wandlern gemäß

$$\tau_I = ([I \cdot \cos \nu] / c_o) \cdot \sin \xi$$

berechnet ist, wobei $\tau_I$ die Zeitverzögerung, I den Abstand zweier Wandler, $\nu$ den Neigungswinkel, $c_o$ die Schallgeschwindigkeit und $\xi$ den antennenbezogenen Peilwinkel bezeichnet, insbesondere die Zeitverzögerung $\tau_k$ zwischen einem der beiden äußersten Wandler und dem k-ten Wandler gemäß

$$\tau_k = ([(k-1) \cdot d \cdot \cos \nu] / c_o) \cdot \sin \xi \quad \text{mit} \quad k = 1, 2, ..., n$$

berechnet ist, wobei d den Abstand zweier benachbarter Wandler und n die Anzahl der Wandler der Antenne mit der Länge L = (n-1) $\cdot$ d bezeichnet.

## Claims

**1.** A method for taking bearings of sound-emitting targets using a receiving antenna (11) with a plurality (n) of electroacoustic converters (12) for receiving sound waves and generating electrical receiving signals, whereby the received signals for forming antenna directive gains (22, 23, 25) with horizontal main receiving directions are subjected to a signal processing comprising the following steps:

- Using time delay coefficients ($\tau$) on the received signals for forming equal-phase received signals, and
- Adding the equal-phase received signals to group signals that are allocated, as a function of the particular time delay coefficients ($\tau$), to bearing angles ($\xi$), so-called antenna-related bearing angles ($\xi$) related to the receiving antenna (11),
- Determining intensity values, especially of levels, of the group signals allocated to the antenna-related bearing angles ($\xi$),
- Preparing an intensity course, especially a level course, resulting from the determined intensity values, especially levels, via the antenna-related bearing angle ($\xi$),
- Determining local maxima in the intensity course, especially local level maxima in the level course, and
- Allocating of bearing angles, so-called bearing angles belonging to targets, that are allocated to targets and lie in a horizontal plane, to antenna-related bearing angles corresponding to the local maxima, especially level maxima, as a function of an angle of inclination ($v$) of the receiving antenna (11) opposite a horizontal plane in that the bearing angles belonging to targets are corrected by a correction value ($\kappa$) dependent on the angle of inclination ($v$) and on the antenna-related bearing angle ($\xi$).

2. A method for taking bearings of sound-emitting targets using a receiving antenna (11) with a plurality (n) of electroacoustic converters (12) for receiving sound waves and generating electrical receiving signals, whereby the received signals for forming antenna directive gains (22, 23, 25) with horizontal main receiving directions are subjected to a signal processing comprising the following steps:

- Using time delay coefficients ($\tau$) on the received signals for forming equal-phase received signals, and
- Adding the equal-phase received signals to group signals that are allocated, as a function of the particular time delay coefficients ($\tau$), to bearing angles ($\xi$), so-called antenna-related bearing angles ($\xi$) related to the receiving antenna (11), whereby the time delay coefficients ($\tau$) are determined as a function of an angle of inclination ($v$) of the receiving antenna (11) opposite a horizontal plane,
- Determining intensity values, especially of levels, of the group signals allocated to the antenna-related bearing angles ($\xi$),
- Preparing an intensity course, especially a level course, resulting from the determined intensity values, especially levels, via the antenna-related bearing angle ($\xi$),
- Determining local maxima in the intensity course, especially local level maxima in the level course, and
- Allocating bearing angles, so-called bearing angles belonging to targets, that are allocated to targets and lie in a horizontal plane, to antenna-related bearing angles corresponding to the local maxima, especially level maxima, as a function of an angle of inclination ($v$) in that in a given angle range of the angle of inclination ($v$), in particular for angle of inclination ($v$) whose amount is less than 45° ($|v| < 45°$), for each angle of inclination ($v_0, v_1, v_2, ..., v_i, ..., v_m$) or for a plurality of angle of inclination ranges for a number of antenna-related bearing angles ($\xi_{i,1}, \xi_{i,2}, ..., \xi_{i,j}, ..., \xi_{i,x}$) a set of time delay coefficients ($\tau_{i,j,1}, \tau_{i,j,2}, ..., \tau_{i,j,n}$) provided for a certain antenna-related bearing angle ($\xi_{i,j}$) is provided for forming several antenna directive gains (22, 23, 25) comprising one or two horizontal main receiving directions ($\alpha$) respectively, and

the sets of time delay coefficients $\tau_{0,j,2}, ..., \tau_{0,j,n}$; $\tau_{1,j,1}, \tau_{1,j,2}, ..., \tau_{1,j,n}$; $\tau_{2,j,1}, \tau_{2,j,2}, ..., \tau_{2,j,n}$; ...; $\tau_{i,j,1}, \tau_{i,j,2}, ..., \tau_{i,j,n}$; ...; $\tau_{m,j,1}, \tau_{m,j,2}, ..., \tau_{m,j,n}$) are determined in such a manner that antenna directive gains (22, 23, 25) corresponding to one another of different angles of inclination ($v_0, v_1, v_2, ..., v_i, ..., v_m$) and/or angle of inclination ranges have the same horizontal main receiving directions ($\alpha$).

3. A method for taking bearings of sound-emitting targets using a receiving antenna (11) with a plurality (n) of electroacoustic converters (12) for receiving sound waves and generating electrical receiving signals, whereby the received signals for forming antenna directive gains (22, 23, 25) with horizontal main receiving directions are subjected to a signal processing comprising the following steps:

- Using time delay coefficients ($\tau$) on the received signals for forming equal-phase received signals, and
- Adding the equal-phase received signals to group signals that are allocated, as a function of the particular time delay coefficients ($\tau$), to bearing angles ($\xi$), so-called antenna-related bearing angles ($\xi$) related to the receiving antenna (11), whereby the time delay coefficients ($\tau$) are determined as a function of an angle of inclination ($v$) of the receiving antenna (11) opposite a horizontal plane,
- Determining intensity values, especially of levels, of the group signals allocated to the antenna-related bearing angles ($\xi$),

- Preparing an intensity course, especially a level course, resulting from the determined intensity values, especially levels, via the antenna-related bearing angle ($\xi$),
- Determining local maxima in the intensity course, especially local level maxima in the level course, and
- Allocating bearing angles, so-called bearing angles belonging to targets, that are allocated to targets and lie in a horizontal plane, to antenna-related bearing angles corresponding to the local maxima, especially level maxima, as a function of the angle of inclination ($\nu$) in that the time delay coefficients

$$(\tau_{1,1}, \tau_{1,2}, ..., \tau_{1,n}; \tau_{2,1}, \tau_{2,2}, ..., \tau_{2,n}; ...; \tau_{j,1}, \tau_{j,2}, ..., \tau_{j,n}; ...; \tau_{x,1}, \tau_{x,2}, ..., \tau_{x,n})$$

of a horizontally aligned receiving antenna (11) are multiplied by the factor cos v.

4. A method for taking bearings of sound-emitting targets using a receiving antenna (11) with a plurality (n) of electroacoustic converters (12) for receiving sound waves and generating electrical receiving signals, whereby the received signals for forming antenna directive gains (22, 23, 25) with horizontal main receiving directions are subjected to a signal processing,
whereby the signal processing calculates bearing angles, so-called bearing angles belonging to targets, that are allocated to targets and lie in a horizontal plane, as a function of an angle of inclination ($\nu$) of the receiving antenna (11) opposite a horizontal plane,
and a mathematical sound speed that can be supplied to the signal processing is multiplied by the factor 1/cos $\nu$, whereby $\nu$ designates the angle of inclination.

5. The method according to claim 4, whereby the signal processing comprises the following steps:

- Using time delay coefficients ($\tau$) on the received signals for forming equal-phase received signals,
- Adding the equal-phase received signals to group signals that are allocated, as ; a function of the particular time delay coefficients ($\tau$), to bearing angles ($\xi$), so-called antenna-related bearing angles ($\xi$) related to the receiving antenna (11),
- Determining intensity values, especially of levels, of the group signals allocated to the antenna-related bearing angles ($\xi$),
- Preparing an intensity course, especially a level course, resulting from the ) determined intensity values, especially levels, via the antenna-related bearing angle ($\xi$),
- Determining local maxima in the intensity course, especially local level maxima in the level course, and
- Allocating bearing angles belonging to targets to local maxima, especially level maxima.

6. The method according to claim 2, whereby the time delay coefficients

$$(\tau_{1,1}, \tau_{1,2}, ..., \tau_{1,n}; \tau_{2,1}, \tau_{2,2}, ..., \tau_{2,n}; ...; \tau_{j,1}, \tau_{j,2}, ..., \tau_{j,n}; ...; \tau_{x,1}, \tau_{x,2}, ..., \tau_{x,n})$$

of a non-inclined, horizontally aligned receiving antenna (11) are multiplied by the factor cos $\nu$ in order to obtain the time delay coefficients for a receiving antenna (11) inclined by the angle of inclination $\nu$.

7. The method according to claim 2 or 3, whereby the sets of time delay coefficients ($\tau_{0,j,1}, \tau_{0,j,2}, ..., \tau_{0,j,n}; \tau_{1,j,1}, \tau_{1,j,2}, ..., \tau_{1,j,n}; \tau_{2,j,1}, \tau_{2,j,2}, ..., \tau_{2,j,n}; ...; \tau_{i,j,1}, \tau_{i,j,2}, ..., \tau_{i,j,n}; \tau_{m,j,1}, \tau_{m,j,2}, ..., \tau_{m,j,n}$) are selected in such a manner that the horizontal main receiving directions ($\alpha$) of the antenna directive gains (22, 23, 25) are arranged at the same angular distances for a certain angle of inclination ($\nu_0, \nu_1, \nu_2, ..., \nu_i, ..., \nu_m$) or angle of inclination range.

8. The method according to claim 2, 3 or 7, whereby a linear antenna with equidistantly arranged converters (12) is used as receiving antenna (11), whereby a time delay between two converters arranged spaced at the distance I is calculated according to $\tau_I = ([I \cdot \cos \nu] / c_o) \cdot \sin \xi$,
whereby $\tau_I$ designates the time delay, I the distance between two converters, $\nu$ the angle of inclination, $c_o$ the sound speed and $\xi$ the antenna-related bearing angle, in particular the time delay $\tau_k$ between one of the two outermost converters and the k-th converter is calculated according to $\tau_k = ([(k-1) \cdot d \cdot \cos \nu] / c_o) \cdot \sin \xi$ mit k=1,2,...,n , whereby d designates the distance between two adjacent converters and n the number of converters of the antenna with the length L = n $\cdot$ d.

9. A direction-finding system for taking bearings of sound-emitting targets by a receiving antenna (11) with a plurality (n) of electroacoustic converters (12) for receiving sound waves and generating electrical receiving signals, with a signal processing device (13) for generating antenna directive gains (22, 23, 25) with horizontal main receiving directions, to which device the received signals can be supplied for the signal processing, and that comprises:

  - a direction generator (14) for using time delay coefficients ($\tau$) on the received signals for generating equal-phase received signals,
  - a group signal processing unit (16) designed for adding the equal-phase received signals to group signals that are allocated as a function of the particular time delay coefficients ($\tau$) to bearing angles ($\xi$), so-called antenna-related bearing angles ($\xi$) related to the receiving antenna,
  whereby the group signal processing unit (16) is furthermore designed to determine intensity values, especially levels, of the group signals allocated to the antenna-related bearing angles ($\xi$), and for determining an intensity course, in particular a level course resulting from the determined intensity values, in particular levels, via the antenna-related bearing angle ($\xi$),
  - a maximum detector (17) for determining local maxima in the intensity course, in particular local level maxima in the level course, and for allocating bearing angles, so-called bearing angles belonging to targets, that are allocated to targets and lie in a horizontal plane, to antenna-related bearing angles corresponding to the local maxima, in particular level maxima, and
  - means (20) for calculating the bearing angles belonging to targets as a function of an angle of inclination ($\nu$) of the receiving antenna (11) opposite a horizontal plane which comprise means (30) for correcting the bearing angles belonging to targets by a correcting value (k) dependent on the angle of inclination ($\nu$) and on the antenna-related bearing angle ($\xi$).

10. A direction-finding system for taking bearings of sound-emitting targets by a receiving antenna (11) with a plurality (n) of electroacoustic converters (12) for receiving sound waves and generating electrical receiving signals, with a signal processing device (13) for generating antenna directive gains (22, 23, 25) with horizontal main receiving directions, to which device the received signals can be supplied for the signal processing, and that comprises:

  - a direction generator (14) for using time delay coefficients ($\tau$) on the received signals for generating equal-phase received signals,
  - a group signal processing unit (16) designed for adding the equal-phase received signals to group signals that are allocated as a function of the particular time delay coefficients ($\tau$) to bearing angles ($\xi$), so-called antenna-related bearing angles ($\xi$) related to the receiving antenna, whereby the signal processing device (13) is designed in such a manner as to determine the time delay coefficients ($\tau$) as a function of an angle of inclination ($\nu$) of the receiving antenna (11) opposite a horizontal plane,
  whereby the group signal processing unit (16) is furthermore designed to determine intensity values, especially of levels, of the group signals allocated to the antenna-related bearing angles ($\xi$), and for determining an intensity course, in particular a level course, resulting from the determined intensity values, in particular levels, via the antenna-related bearing angle ($\xi$),
  - a maximum detector (17) for determining local maxima in the intensity course, in particular local level maxima in the level course, and for allocating bearing angles, so-called bearing angles belonging to targets, that are allocated to targets and lie in a horizontal plane, to antenna-related bearing angles corresponding to the local maxima, in particular level maxima, and
  - means (20) for calculating the bearing angles belonging to targets as a function of the angle of inclination ($\nu$) in that in a given angle range of the angle of inclination ($\nu$), in particular for angles of inclination ($\nu$) whose amount is less than 45° ($|\nu| < 45°$), for each angle of inclination ($\nu_0, \nu_1, \nu_2, ..., \nu_i, ..., \nu_m$) or for a plurality of angle of inclination ranges for a number of antenna-related bearing angles ($\xi_{i,1}, \xi_{i,2}, ..., \xi_{i,j}, ..., \xi_{i,x}$) a set of time delay coefficients ($\tau_{i,j,1}, \tau_{i,j,2}, ..., \tau_{i,j,n}$) provided for a certain antenna-related bearing angle ($\xi_{i,j}$) is provided for forming several antenna directive gains (22, 23, 25) comprising one or two horizontal main receiving directions ($\alpha$) respectively, and the sets of time delay coefficients ($\tau_{0,j,1}, \tau_{0,j,2}, ..., \tau_{0,j,n}; \tau_{1,j,1}, \tau_{1,j,2}, ..., \tau_{1,j,n}; \tau_{2,j,1}, \tau_{2,j,2}, ..., \tau_{2,j,n}; ...; \tau_{i,j,1}, \tau_{i,j,2}, ..., \tau_{i,j,n}; ...; \tau_{m,j,1}, \tau_{m,j,2}, ..., \tau_{m,j,n}$) are determined in such a manner that antenna directive gains (22, 23, 25) corresponding to one another of different angles of inclination ($\nu_0, \nu_1, \nu_2, ..., \nu_i, ..., \nu_m$) and/or angle of inclination ranges have the same horizontal main receiving directions ($\alpha$).

11. A direction-finding system for taking bearings of sound-emitting targets by a receiving antenna (11) with a plurality (n) of electroacoustic converters (12) for receiving sound waves and generating electrical receiving signals, with a signal processing device (13) for generating antenna directive gains (22, 23, 25) with horizontal main receiving directions, to which device the received signals can be supplied for the signal processing, and that comprises:

- a direction generator (14) for using time delay coefficients ($\tau$) on the received signals for generating equal-phase received signals,
- a group signal processing unit (16) designed for adding the equal-phase received signals to group signals that are allocated as a function of the particular time delay coefficients ($\tau$) to bearing angles ($\xi$), so-called antenna-related bearing angles ($\xi$) related to the receiving antenna, whereby the signal processing device (13) is designed in such a manner as to determine the time delay coefficients ($\tau$) as a function of an angle of inclination ($\nu$) of the receiving antenna (11) opposite a horizontal plane,
whereby the group signal processing unit (16) is furthermore designed to determine intensity values, especially levels, of the group signals allocated to the antenna-related bearing angles ($\xi$), and for determining an intensity course, in particular a level course resulting from the determined intensity values, in particular levels, via the antenna-related bearing angle ($\xi$),
- a maximum detector (17) for determining local maxima in the intensity course, in particular local level maxima in the level course, and for allocating bearing angles, so-called bearing angles belonging to targets, that are allocated to targets and lie in a horizontal plane, to antenna-related bearing angles corresponding to the local maxima, in particular level maxima, and
- means (20) for calculating the bearing angles belonging to targets as a function of the angle of inclination ($\nu$), to which end

the direction-finding system (10) comprises a multiplier (32) for multiplying the time delay coefficients ($\tau_{1,1}, \tau_{1,2}, ..., \tau_{1,n}; \tau_{2,1}, \tau_{2,2}, ..., \tau_{2,n}; ...; \tau_{j,1}, \tau_{j,2}, ..., \tau_{j,n}; ...; \tau_{x,1}, \tau_{x,2}, ..., \tau_{x,n}$) of a horizontally aligned receiving antenna by the factor cos $\nu$.

12. A direction-finding system for taking bearings of sound-emitting targets by a receiving antenna (11) with a plurality (n) of electroacoustic converters (12) for receiving sound waves and generating electrical receiving signals, with a signal processing device (13) for generating antenna directive gains (22, 23, 25) with horizontal main receiving directions, to which device the received signals can be supplied for the signal processing,
whereby the signal processing device (13) comprises means (20) for calculating bearing angles, so-called bearing angles belonging to targets that are allocated to targets as a function of an angle of inclination ($\nu$) of the receiving antenna (11) opposite a horizontal plane, and the direction-finding system (10) comprises means for multiplying a mathematical sound speed that can be supplied to the signal processing device by the factor 1/cos $\nu$, whereby $\nu$ designates the angle of inclination.

13. The direction-finding system according to claim 12, whereby the signal processing device (13) comprises:

- a direction generator (14) for using time delay coefficients ($\nu$) on the received signals for generating equal-phase received signals,

- a group signal processing unit (16) for adding the equal-phase received signals to group signals that are allocated as a function of the particular time delay coefficients ($\tau$) to bearing angles ($\xi$), so-called antenna-related bearing angles ($\xi$) related to the receiving antenna, for determining intensity values, especially levels, of the group signals allocated to the antenna-related bearing angles ($\xi$), and for preparing an intensity course, especially a level course, resulting from the determined intensity values, especially from levels, via the antenna-related bearing angle ($\xi$), and

- a maximum detector (17) for determining local maxima in the intensity course, especially local level maxima in the level course, and for allocating bearing angles belonging to targets to local maxima, especially level maxima.

14. The direction-finding system according to claim 10, that comprises a multiplier (32) for multiplying the time delay coefficients ($\tau_{1,1}, \tau_{1,2}, ..., \tau_{1,n}; \tau_{2,1}, \tau_{2,2}, ..., \tau_{2,n}; ...; \tau_{j,1}, \tau_{j,2}, ..., \tau_{j,n}; ...; \tau_{x,1}, \tau_{x,2}, ..., \tau_{x,n}$) of a non-inclined, horizontally designed receiving antenna by the factor cos $\nu$ in order to obtain the time delay coefficients for a receiving antenna inclined by the angle of inclination $\nu$.

15. The direction-finding system according to claim 10 or 11, whereby the receiving antenna (11) is a linear antenna with equidistantly arranged converters (12), whereby a time delay between two converters arranged spaced at a distance I is calculated according to

$$\tau_l = ([l \cdot \cos v] / c_o) \bullet \sin \xi \quad,$$

whereby $\tau_l$ designates the time delay, l the distance between two converters, $v$ the angle of inclination, $c_o$ the sound speed and $\xi$ the antenna-related bearing angle, in particular the time delay $\tau_k$ between one of the two outermost converters and the k-th converter is calculated according to $\tau_k = ([(k-1) \cdot d \cdot \cos v] / c_o) \cdot \sin \xi$ mit k = 1,2,..., n , whereby d designates the distance between two adjacent converters and n the number of converters of the antenna with the length L = (n-1) · d.

**Revendications**

1. Procédé de relèvement de cibles émettant des ondes sonores utilisant une antenne de réception (11) avec une pluralité (n) de transducteurs électroacoustiques (12) pour recevoir des ondes sonores et générer des signaux de réception électriques, dans lequel les signaux de réception sont soumis à un traitement de signal pour former des gains directionnels d'antenne (22, 23, 25) avec des directions de réception principales horizontales, comprenant les étapes suivantes :

   - application de coefficients de temporisation ($\tau$) aux signaux de réception pour former des signaux de réception en phase et
   - addition des signaux de réception en phase à des signaux de groupe, qui sont assignés en fonction des coefficients de temporisation ($\tau$) respectifs à des angles de relèvement ($\xi$) relatifs à l'antenne de réception (11), appelés angles de relèvement ($\xi$) spécifiques à l'antenne,
   - détermination de valeurs d'intensité, en particulier de niveaux, des signaux de groupe en association avec les angles de relèvement ($\xi$) spécifiques à l'antenne,
   - génération d'une courbe d'intensité obtenue à partir des valeurs d'intensité, en particulier des niveaux, déterminés, en particulier d'une courbe de niveau, par rapport à l'angle de relèvement ($\xi$) spécifique à l'antenne,
   - détermination de maxima locaux dans la courbe d'intensité, en particulier de maxima de niveau locaux dans la courbe de niveau, et
   - assignation d'angles de relèvement situés dans un plan horizontal assignés à des cibles, appelés angles de relèvement intrinsèques à la cible, à des angles de relèvement spécifiques à l'antenne selon les maxima locaux, en particulier les maxima de niveau, en fonction d'un angle d'inclinaison (v) de l'antenne de réception (11) par rapport à un plan horizontal, en ce que les angles de relèvement intrinsèques à la cible sont corrigés par une valeur de correction (k) dépendante de l'angle d'inclinaison (v) et de l'angle de relèvement spécifique à l'antenne ($\xi$).

2. Procédé de relèvement de cibles émettant des ondes sonores utilisant une antenne de réception (11) avec une pluralité (n) de transducteurs électroacoustiques (12) pour recevoir des ondes sonores et générer des signaux de réception électriques, dans lequel les signaux de réception sont soumis à un traitement de signal pour former des gains directionnels d'antenne (22, 23, 25) avec des directions de réception principales horizontales, comprenant les étapes suivantes :

   - application de coefficients de temporisation ($\tau$) aux signaux de réception pour former des signaux de réception en phase et
   - addition des signaux de réception en phase à des signaux de groupe, qui sont assignés en fonction des coefficients de temporisation ($\tau$) respectifs à des angles de relèvement ($\xi$) relatifs à l'antenne de réception (11), appelés angles de relèvement ($\xi$) spécifiques à l'antenne, dans lequel les coefficients de temporisation ($\tau$) sont déterminés en fonction d'un angle d'inclinaison (v) de l'antenne de réception (11) par rapport à un plan horizontal,
   - détermination de valeurs d'intensité, en particulier de niveaux, des signaux de groupe en association avec les angles de relèvement ($\xi$) spécifiques à l'antenne,
   - génération d'une courbe d'intensité obtenue à partir des valeurs d'intensité, en particulier des niveaux, déterminés, en particulier d'une courbe de niveau, par rapport à l'angle de relèvement ($\xi$) spécifique à l'antenne,
   - détermination de maxima locaux dans la courbe d'intensité, en particulier de maxima de niveau locaux dans la courbe de niveau, et
   - assignation d'angles de relèvement situés dans un plan horizontal assignés à des cibles, appelés angles de relèvement intrinsèques à la cible, à des angles de relèvement spécifiques à l'antenne selon les maxima locaux, en particulier les maxima de niveau, en fonction de l'angle d'inclinaison (v), en ce que, dans une plage d'angles prédéterminée de l'angle d'inclinaison (v), en particulier pour des angles d'inclinaison (v) dont la valeur est inférieure à 45° (|v| < 45°), pour chaque angle d'inclinaison ($v_0$, $v_1$, $v_2$, ..., $v_i$, ..., $v_m$) ou pour une pluralité de plages d'angles d'inclinaison pour un nombre d'angles de relèvement spécifiques à l'antenne ($\xi_{i,1}$, $\xi_{i,2}$, ..., $\xi_{i,j}$, ..., $\xi_{i,x}$), respectivement un ensemble de coefficients de temporisation ($T_{i,j,i}$, $T_{i,j,2}$, ..., $T_{i,j,n}$) prévu pour un angle de relèvement ($\xi_{i,j}$) spécifique à l'antenne déterminé est mis à disposition pour former plusieurs gains directionnels d'antenne (22, 23, 25) présentant respectivement une ou deux directions de réception principales horizontales ($\alpha$) et

les ensembles de coefficients de temporisation ($T_{0,j,1}$, $T_{0,j,2}$, ..., $T_{0,j,n}$ ; $T_{1,j,1}$, $T_{1,j2}$, ..., $T_{1,j,n}$ ; $T_{2,j,1}$, $T_{2,j,2}$, ..., $T_{2,j,n}$ ; ... ; $T_{i,j,1}$, $T_{i,j,2}$, ..., $T_{i,j,n}$; ...; $T_{m,j,1}$, $T_{m,j,2}$, ..., $T_{m,j,n}$) sont déterminés de telle sorte que des gains directionnels d'antenne (22, 23, 25) correspondants les uns aux autres de différents angles d'inclinaison ($v_0$, $v_1$, $v_2$, ..., $v_i$, ..., $v_m$), respectivement plages d'angles d'inclinaison présentent des directions de réception principales horizontales ($\alpha$) identiques.

**3.** Procédé de relèvement de cibles émettant des ondes sonores utilisant une antenne de réception (11) avec une pluralité (n) de transducteurs électroacoustiques (12) pour recevoir des ondes sonores et générer des signaux de réception électriques, dans lequel les signaux de réception sont soumis à un traitement de signal pour former des gains directionnels d'antenne (22, 23, 25) avec des directions de réception principales horizontales, comprenant les étapes suivantes :

- application de coefficients de temporisation ($\tau$) aux signaux de réception pour former des signaux de réception en phase et
- addition des signaux de réception en phase à des signaux de groupe, qui sont assignés en fonction des coefficients de temporisation ($\tau$) respectifs à des angles de relèvement ($\xi$) relatifs à l'antenne de réception (11), appelés angles de relèvement ($\xi$) spécifiques à l'antenne, dans lequel les coefficients de temporisation ($\tau$) sont déterminés en fonction d'un angle d'inclinaison (v) de l'antenne de réception (11) par rapport à un plan horizontal,
- détermination de valeurs d'intensité, en particulier de niveaux, des signaux de groupe en association avec les angles de relèvement ($\xi$) spécifiques à l'antenne,
- génération d'une courbe d'intensité obtenue à partir des valeurs d'intensité, en particulier des niveaux, déterminés, en particulier d'une courbe de niveau, par rapport à l'angle de relèvement ($\xi$) spécifique à l'antenne,
- détermination de maxima locaux dans la courbe d'intensité, en particulier de maxima de niveau locaux dans la courbe de niveau, et
- assignation d'angles de relèvement situés dans un plan horizontal, assignés à des cibles, appelés angles de relèvement intrinsèques à la cible, à des angles de relèvement spécifiques à l'antenne selon les maxima locaux, en particulier les maxima de niveau, en fonction de l'angle d'inclinaison (v), en ce que les coefficients de temporisation ($\tau_{1,1}$, $\tau_{1,2}$, ..., $\tau_{1,n}$ ; $\tau_{2,1}$, $\tau_{2,2}$, ... , $\tau_{2,n}$ ; ... ; $\tau_{j,1}$, $\tau_{j,2}$, ..., $\tau_{j,n}$ ; ... ; $\tau_{x,1}$, $\tau_{x,2}$, ..., $\tau_{x,n}$) d'une antenne de réception (11) orientée horizontalement sont multipliés par le facteur cos v.

**4.** Procédé de relèvement de cibles émettant des ondes sonores utilisant une antenne de réception (11) avec une pluralité (n) de transducteurs électroacoustiques (12) pour recevoir des ondes sonores et générer des signaux de réception électriques, dans lequel les signaux de réception sont soumis à un traitement de signal pour former des gains directionnels d'antenne (22, 23, 25) avec des directions de réception principales horizontales, dans lequel le traitement de signal calcule des angles de relèvement situés dans un plan horizontal, assignés à des cibles, appelés angles de relèvement intrinsèques à la cible, en fonction d'un angle d'inclinaison (v) de l'antenne de réception (11) par rapport à un plan horizontal, et une vitesse du son calculée pouvant être acheminée au traitement de signal est multipliée par le facteur 1/cos v, v désignant l'angle d'inclinaison.

**5.** Procédé selon la revendication 4, dans lequel le traitement de signal présente les étapes suivantes :

- application de coefficients de temporisation ($\tau$) aux signaux de réception pour former des signaux de réception en phase,
- addition des signaux de réception en phase à des signaux de groupe, qui sont assignés en fonction des coefficients de temporisation ($\tau$) respectifs à des angles de relèvement ($\xi$) relatifs à l'antenne de réception (11), appelés angles de relèvement ($\xi$) spécifiques à l'antenne,
- détermination de valeurs d'intensité, en particulier de niveaux, des signaux de groupe en association avec les angles de relèvement ($\xi$) spécifiques à l'antenne,
- génération d'une courbe d'intensité obtenue à partir des valeurs d'intensité, en particulier des niveaux, déterminés, en particulier d'une courbe de niveau, par rapport aux angles de relèvement ($\xi$) spécifiques à l'antenne,

- détermination de maxima locaux dans la courbe d'intensité, en particulier de maxima de niveau locaux dans la courbe de niveau, et

- assignation d'angles de relèvement intrinsèques à la cible à des maxima locaux, en particulier des maxima de niveau.

**6.** Procédé selon la revendication 2, dans lequel les coefficients de temporisation ($\tau_{1,1}$, $\tau_{1,2}$, ..., $\tau_{1,n}$ ; $\tau_{2,1}$, $\tau_{2,2}$, ..., $\tau_{2,n}$ ; ... ; $\tau_{j,1}$, $\tau_{j,2}$, ..., $\tau_{j,n}$ ; ... ; $\tau_{x,1}$, $\tau_{x,2}$, ..., $\tau_{x,n}$) d'une antenne de réception (11) orientée horizontalement non inclinée sont multipliés par le facteur cos v, pour obtenir les coefficients de temporisation pour une antenne de réception (11) inclinée selon l'angle d'inclinaison v.

**7.** Procédé selon la revendication 2 ou 3, dans lequel les ensembles de coefficients de temporisation ($\tau_{0,j,1}$, $\tau_{0,j,2}$, ..., $\tau_{0,j,n}$ ; $\tau_{1,j,1}$, $\tau_{1,j2}$, ..., $\tau_{1,j,n}$ ; $\tau_{2,j,1}$, $\tau_{2,j,2}$, ..., $\tau_{2,j,n}$ ; ... ; $\tau_{i,j,1}$, $\tau_{i,j,2}$, ..., $\tau_{i,j,n}$ ; ... ; $\tau_{m,j,1}$, $\tau_{m,j,2}$, ..., $\tau_{m,j,n}$) sont sélectionnés de telle sorte que pour respectivement un angle d'inclinaison ($v_0$, $v_1$, $v_2$, ..., $v_i$, ..., $v_m$), ou respectivement une plage d'angles d'inclinaison déterminés les directions de réception principales horizontales ($\alpha$) des gains directionnels d'antenne (22, 23, 25) sont disposées à des distances angulaires identiques.

**8.** Procédé selon la revendication 2, 3 ou 7, dans lequel une antenne linéaire avec des transducteurs (12) disposés à équidistance est utilisée comme antenne de réception (11), une temporisation entre deux transducteurs disposés espacés d'une distance l étant calculée selon

$$\tau_l = ([l \cdot \cos v] / c_o) \cdot \sin \xi$$

$\tau_l$ désignant la temporisation, l la distance entre deux transducteurs, v l'angle d'inclinaison, $c_o$ la vitesse du son et $\xi$ l'angle de relèvement spécifique à l'antenne, en particulier la temporisation $\tau_k$ entre l'un des deux transducteurs les plus à l'extérieur et le k-ième transducteur étant calculée selon

$$\tau_k = ([(k-1) \cdot d \cdot \cos v] / c_o) \cdot \sin \xi \text{ avec } k = 1, 2, ..., n$$

d désignant la distance entre deux transducteurs voisins et n le nombre des transducteurs de l'antenne avec la longueur L = n · d.

**9.** Dispositif de relèvement de cibles émettant des ondes sonores au moyen d'une antenne de réception (11) avec une pluralité (n) de transducteurs électroacoustiques (12) pour recevoir des ondes sonores et générer des signaux de réception électriques, avec un dispositif de traitement de signal (13) pour former des gains directionnels d'antenne (22, 23, 25) avec des directions de réception principales horizontales, auquel les signaux de réception peuvent être acheminés pour le traitement de signal et qui présente :

- un générateur de direction (14) pour appliquer des coefficients de temporisation ($\tau$) aux signaux de réception pour former des signaux de réception en phase,

- une unité de traitement de signal de groupe (16) qui est conçue pour l'addition des signaux de réception en phase à des signaux de groupe, qui sont assignés en fonction des coefficients de temporisation ($\tau$) respectifs à des angles de relèvement ($\xi$) relatifs à l'antenne de réception, appelés angles de relèvement ($\xi$) spécifiques à l'antenne,

dans lequel l'unité de traitement de signal de groupe (16) est en outre conçue pour déterminer des valeurs d'intensité, en particulier des niveaux, des signaux de groupe en association avec les angles de relèvement ($\xi$) spécifiques à l'antenne et pour générer une courbe d'intensité obtenue à partir des valeurs d'intensité, en particulier des niveaux, déterminés, en particulier une courbe de niveau, par rapport à l'angle de relèvement ($\xi$) spécifique à l'antenne,

- un détecteur de maximum (17) pour déterminer des maxima locaux dans la courbe d'intensité, en particulier des maxima de niveau locaux dans la courbe de niveau, et pour assigner des angles de relèvement situés dans un plan horizontal assignés à des cibles, appelés angles de relèvement intrinsèques à la cible, à des angles de relèvement spécifiques à l'antenne selon les maxima locaux, en particulier les maxima de niveau, et

- des moyens (20) pour calculer les angles de relèvement intrinsèques à la cible en fonction d'un angle d'inclinaison (v) de l'antenne de réception (11) par rapport à un plan horizontal, qui comprennent des moyens (30) pour corriger les angles de relèvement intrinsèques à la cible par une valeur de correction (k) dépendante de l'angle d'inclinaison (v) et de l'angle de relèvement ($\xi$) spécifique à l'antenne.

**10.** Dispositif de relèvement de cibles émettant des ondes sonores au moyen d'une antenne de réception (11) avec une pluralité (n) de transducteurs électroacoustiques (12) pour recevoir des ondes sonores et générer des signaux de réception électriques, avec un dispositif de traitement de signal (13) pour former des gains directionnels d'antenne (22, 23, 25) avec des directions de réception principales horizontales, auquel les signaux de réception peuvent être acheminés pour le traitement de signal et qui présente :

- un générateur de direction (14) pour appliquer des coefficients de temporisation ($\tau$) aux signaux de réception pour former des signaux de réception en phase,
- une unité de traitement de signal de groupe (16), qui est conçue pour l'addition des signaux de réception en phase à des signaux de groupe, qui sont assignés en fonction des coefficients de temporisation ($\tau$) respectifs à des angles de relèvement ($\xi$) relatifs à l'antenne de réception, appelés angles de relèvement ($\xi$) spécifiques à l'antenne, dans lequel l'unité de traitement de signal (13) est conçue de façon à déterminer les coefficients de temporisation ($\tau$) en fonction d'un angle d'inclinaison (v) de l'antenne de réception (11) par rapport à un plan horizontal,

dans lequel l'unité de traitement de signal de groupe (16) est en outre conçue pour déterminer des valeurs d'intensité, en particulier des niveaux, des signaux de groupe en association avec les angles de relèvement ($\xi$) spécifiques à l'antenne et pour générer une courbe d'intensité obtenue à partir des valeurs d'intensité, en particulier des niveaux, déterminés, en particulier une courbe de niveau, par rapport à l'angle de relèvement ($\xi$) spécifique à l'antenne,

- un détecteur de maximum (17) pour déterminer des maxima locaux dans la courbe d'intensité, en particulier des maxima de niveau locaux dans la courbe de niveau, et pour assigner des angles de relèvement situés dans un plan horizontal assignés à des cibles, appelés angles de relèvement intrinsèques à la cible, à des angles de relèvement spécifiques à l'antenne selon les maxima locaux, en particulier les maxima de niveau, et
- des moyens (20) pour calculer les angles de relèvement intrinsèques à la cible en fonction de l'angle d'inclinaison (v), en ce que, dans une plage d'angles prédéterminée de l'angle d'inclinaison (v), en particulier pour des angles d'inclinaison (v) dont la valeur est inférieure à 45° ($|v| < 45°$), pour chaque angle d'inclinaison ($v_0$, $v_1$, $v_2$, ..., $v_i$, ..., $v_m$) ou pour une pluralité de plages d'angles d'inclinaison pour un nombre d'angles de relèvement spécifiques à l'antenne ($\xi_{i,1}$, $\xi_{i,2}$, ..., $\xi_{i,j}$, ..., $\xi_{i,x}$), respectivement un ensemble de coefficients de temporisation ($\tau_{i,j,1}$, $\tau_{i,j,2}$, ..., $\tau_{i,j,n}$) prévu pour un angle de relèvement ($\xi_{i,j}$) spécifique à l'antenne déterminé est mis à disposition pour former plusieurs gains directionnels d'antenne (22, 23, 25) présentant respectivement une ou deux directions de réception principales horizontales ($\alpha$) et

les ensembles de coefficients de temporisation ($\tau_{0,j,1}$, $\tau_{0,j,2}$, ..., $\tau_{0,j,n}$ ; $\tau_{1,j,1}$, $\tau_{i,j2}$, ..., $\tau_{1,j,n}$ ; $\tau_{2,j,1}$, $\tau_{2,j,2}$, ..., $\tau_{2,j,n}$ ; ... ; $\tau_{i,j,1}$, $\tau_{i,j,2}$, ..., $\tau_{i,j,n}$ ; ... ; $\tau_{m,j,1}$, $\tau_{m,j,2}$, ..., $\tau_{m,j,n}$) sont déterminés de telle sorte que des gains directionnels d'antenne (22, 23, 25) correspondants les uns aux autres de différents angles d'inclinaison ($v_0$, $v_1$, $v_2$, ..., $v_i$, ..., $v_m$), respectivement plages d'angles d'inclinaison présentent des directions de réception principales horizontales ($\alpha$) identiques.

**11.** Dispositif de relèvement de cibles émettant des ondes sonores au moyen d'une antenne de réception (11) avec une pluralité (n) de transducteurs électroacoustiques (12) pour recevoir des ondes sonores et générer des signaux de réception électriques, avec un dispositif de traitement de signal (13) pour former des gains directionnels d'antenne (22, 23, 25) avec des directions de réception principales horizontales, auquel les signaux de réception peuvent être acheminés pour le traitement de signal et qui présente :

- un générateur de direction (14) pour appliquer des coefficients de temporisation ($\tau$) aux signaux de réception pour former des signaux de réception en phase,
- une unité de traitement de signal de groupe (16), qui est conçue pour l'addition des signaux de réception en phase à des signaux de groupe, qui sont assignés en fonction des coefficients de temporisation ($\tau$) respectifs à des angles de relèvement ($\xi$) relatifs à l'antenne de réception, appelés angles de relèvement ($\xi$) spécifiques à l'antenne, dans lequel l'unité de traitement de signal (13) est conçue de façon à déterminer les coefficients de temporisation ($\tau$) en fonction d'un angle d'inclinaison (v) de l'antenne de réception (11) par rapport à un plan horizontal,

dans lequel l'unité de traitement de signal de groupe (16) est en outre conçue pour déterminer des valeurs d'intensité, en particulier des niveaux, des signaux de groupe en association avec les angles de relèvement ($\xi$)

spécifiques à l'antenne et pour générer une courbe d'intensité obtenue à partir des valeurs d'intensité, en particulier des niveaux, déterminés, en particulier une courbe de niveau, par rapport à l'angle de relèvement ($\xi$) spécifique à l'antenne,

- un détecteur de maximum (17) pour déterminer des maxima locaux dans la courbe d'intensité, en particulier des maxima de niveau locaux dans la courbe de niveau, et pour assigner des angles de relèvement situés dans un plan horizontal assignés à des cibles, appelés angles de relèvement intrinsèques à la cible, à des angles de relèvement spécifiques à l'antenne selon les maxima locaux, en particulier les maxima de niveau, et

- des moyens (20) pour calculer les angles de relèvement intrinsèques à la cible en fonction de l'angle d'inclinaison (v), ce pour quoi

le dispositif de relèvement (10) présente un multiplicateur (32) pour multiplier les coefficients de temporisation ($\tau_{1,1}$, $\tau_{1,2}$, ..., $\tau_{1,n}$ ; $\tau_{2,1}$, $\tau_{2,2}$, ..., $\tau_{2,n}$ ; ... ; $\tau_{j,1}$, $\tau_{j,2}$, ..., $\tau_{j,n}$ ; ... ; $\tau_{x,1}$, $\tau_{x,2}$, ..., $\tau_{x,n}$) d'une antenne de réception orientée horizontalement par le facteur cos v.

12. Dispositif de relèvement de cibles émettant des ondes sonores au moyen d'une antenne de réception (11) avec une pluralité (n) de transducteurs électroacoustiques (12) pour recevoir des ondes sonores et générer des signaux de réception électriques, avec un dispositif de traitement de signal (13) pour former des gains directionnels d'antenne (22, 23, 25) avec des directions de réception principales horizontales, auquel les signaux de réception peuvent être acheminés pour le traitement de signal,

dans lequel le dispositif de traitement de signal (13) présente des moyens (20) pour calculer des angles de relèvement assignés à des cibles, appelés angles de relèvement intrinsèques à la cible, en fonction d'un angle d'inclinaison (v) de l'antenne de réception (11) par rapport à un plan horizontal et le dispositif de relèvement (10) présente des moyens pour multiplier une vitesse du son calculée pouvant être acheminée au dispositif de traitement de signal par le facteur 1/cos v, v désignant l'angle d'inclinaison.

13. Dispositif de relèvement selon la revendication 12, dans lequel le dispositif de traitement de signal (13) présente :

- un générateur de direction (14) pour appliquer des coefficients de temporisation ($\tau$) aux signaux de réception pour former des signaux de réception en phase,

- une unité de traitement des signaux de groupe (16) pour additionner les signaux de réception en phase à des signaux de groupe, qui sont assignés en fonction des coefficients de temporisation ($\tau$) respectifs à des angles de relèvement ($\xi$) relatifs à l'antenne de réception, appelés angles de relèvement ($\xi$) spécifiques à l'antenne, pour déterminer des valeurs d'intensité, en particulier des niveaux, des signaux de groupe en association avec les angles de relèvement ($\xi$) spécifiques à l'antenne et pour générer une courbe d'intensité obtenue à partir des valeurs d'intensité, en particulier des niveaux, déterminés, en particulier une courbe de niveau, par rapport aux angles de relèvement ($\xi$) spécifiques à l'antenne, et

- un détecteur de maximum (17) pour déterminer des maxima locaux dans la courbe d'intensité, en particulier des maxima de niveau locaux dans la courbe de niveau, et pour assigner des angles de relèvement intrinsèques à la cible à des maxima locaux, en particulier des maxima de niveau.

14. Dispositif de relèvement selon la revendication 10, qui présente un multiplicateur (32) pour multiplier les coefficients de temporisation ($\tau_{1,1}$, $\tau_{1,2}$, ..., $\tau_{1,n}$ ; $\tau_{2,1}$, $\tau_{2,2}$, ..., $\tau_{2,n}$ ; ... ; $\tau_{j,1}$, $\tau_{j,2}$, ..., $\tau_{j,n}$ ; ... ; $\tau_{x,1}$, $\tau_{x,2}$, ..., $\tau_{x,n}$) d'une antenne de réception conçue horizontalement non inclinée par le facteur cos v, pour obtenir les coefficients de temporisation pour une antenne de réception inclinée selon l'angle d'inclinaison v.

15. Dispositif de relèvement selon la revendication 10 ou 11, dans lequel l'antenne de réception (11) est une antenne linéaire avec des transducteurs (12) disposés à équidistance, une temporisation entre deux transducteurs disposés espacés à une distance I étant calculée selon

$$\tau_I = ([I \cdot \cos v] / c_o) \cdot \sin \xi$$

$\tau_I$ désignant la temporisation, I la distance entre deux transducteurs, v l'angle d'inclinaison, $C_o$ la vitesse du son et $\xi$ l'angle de relèvement spécifique à l'antenne, en particulier la temporisation $\tau_k$ entre l'un des deux transducteurs les plus à l'extérieur et le k-ième transducteur étant calculée selon

$$\tau_k = \left(\left[(k-1) \cdot d \cdot \cos v\right] / c_o\right) \cdot \sin \xi \quad \text{avec } k = 1, 2, \ldots, n$$

d désignant la distance entre deux transducteurs voisins et n le nombre des transducteurs de l'antenne avec la longueur L = (n-1) · d.

*Fig. 1*

Fig. 34

Fig. 35

Fig. 30

Fig. 31

Fig. 2

Fig. 3

23 21
24
α = -10°
ξ = -10°
11
x
10°
23
24
y

*Fig. 4*

23 21
24
α ≈ -11°
ξ = -10°
11
x
ca. 11°
y

*Fig. 12*

z
24 23 21
10°
ξ = -10°
11
x
10°
23

*Fig. 5*

z
23
24 21
10°
ξ = -10°
x
ν = 10°
11
10°

*Fig. 13*

Fig. 14

Fig. 15

Fig. 6

Fig. 7

EP 2 145 204 B1

Fig. 10

Fig. 11

Fig. 8

Fig. 9

32

Fig. 18

Fig. 19

Fig. 16

Fig. 17

*Fig. 20*

*Fig. 22*

*Fig. 21*

*Fig. 23*

Fig. 26

Fig. 27

Fig. 24

Fig. 25

35

_Fig. 32_

_Fig. 28_

_Fig. 29_

*Fig. 33*

_Fig. 36_

$L' = L \cdot \cos \nu$

_Fig. 37_

HN

$L'' = L' \cdot \sin \xi$

_Fig. 38_

_Fig. 39_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2412967 A
- US 20020023497 A1

- JP 08220217 A